# EUROPEAN PATENT APPLICATION

(11) **EP 4 611 148 A1**
(43) Date of publication of application: **03.09.2025**
(21) Application number: 23936372.4
(22) Date of filing: 12.10.2023
(51) Int. Cl.: H01M 50/342, H01M 50/15

(54) **PRESSURE RELIEF COMPONENT, BATTERY CELL, BATTERY AND ELECTRICAL APPARATUS**

(30) Priority: 06.05.2023 CN 202310501484
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); LI, Quankun, Ningde, Fujian 352100 (CN); WANG, Peng, Ningde, Fujian 352100 (CN)
(74) Representative: Frick, Robert
(86) International application number: PCT/CN2023/124325
(87) International publication number: WO 2024/230067

(57) **Abstract**

A pressure relief component, a battery cell, a battery, and an electrical apparatus are provided and pertain to the field of battery technologies. The pressure relief component includes a pressure relief portion, a reinforcing portion, and a first weakened portion. The pressure relief portion is configured to rupture when the battery cell relieves pressure, so as to release the internal pressure of the battery cell. The reinforcing portion is connected to the pressure relief portion, and the reinforcing portion is arranged around the pressure relief portion. The first weakened portion is connected to the pressure relief portion via the reinforcing portion, stiffness of the first weakened portion being less than stiffness of the reinforcing portion. This structure of the pressure relief component makes the first weakened portion more prone to deformation, allowing the first weakened portion to absorb the deformation energy of the battery cell when the battery cell is subjected to internal and external impacts and deforms, enabling the first weakened portion to provide a certain buffering effect, thereby reducing phenomena such as deformation or damage to the pressure relief portion, and improving the operational stability and service life of the pressure relief component.

## Description

### CROSS-REFERENCE TO RELATED APPLICATIONS

This application claims priority to Chinese Patent Application No. 2023105014847, filed on May 6, 2023, entitled "PRESSURE RELIEF COMPONENT, BATTERY CELL, BATTERY, AND ELECTRICAL APPARATUS", which is incorporated herein by reference in its entirety.

### TECHNICAL FIELD

This application relates to the field of battery technology, and specifically, to a pressure relief component, a battery cell, a battery, and an electrical apparatus.

### BACKGROUND TECHNOLOGY

In recent years, there has been a leap in the development of new energy vehicles. In the field of electric vehicles, traction batteries serve as an irreplaceable and crucial power source. With the widespread promotion of new energy vehicles, the demand for traction battery products has been increasing day by day. Among these, as core components of new energy vehicles, batteries have relatively high requirements in terms of reliability and service life.

In battery technologies, to ensure the safety of battery cells, a pressure relief component is typically provided on the housing of the battery cell to release internal pressure, so that the pressure relief component can actuate and release the internal pressure of the battery cell when the internal pressure or temperature reaches a threshold. However, existing pressure relief components of battery cells often experience premature actuation and pressure relief during use, resulting in poor operational stability of the battery cell, which is detrimental to improving the service life and reliability of the battery cell.

### SUMMARY OF THE INVENTION

Embodiments of this application provide a pressure relief component, a battery cell, a battery, and an electrical apparatus, capable of effectively improving the service life and reliability of the battery cell.

According to a first aspect, an embodiment of this application provides a pressure relief component applied to a battery cell, the pressure relief component including a pressure relief portion, a reinforcing portion, and a first weakened portion; where the pressure relief portion is configured to rupture when the battery cell relieves pressure, so as to release the internal pressure of the battery cell; the reinforcing portion is connected to the pressure relief portion, and the reinforcing portion is arranged around the pressure relief portion; and the first weakened portion is connected to the pressure relief portion via the reinforcing portion, stiffness of the first weakened portion being less than stiffness of the reinforcing portion.

In the foregoing technical solution, the pressure relief component is provided with the pressure relief portion, the reinforcing portion, and the first weakened portion that are sequentially connected, and the reinforcing portion is arranged around the pressure relief portion, so that the pressure relief portion is structured to be connected to the first weakened portion through the reinforcing portion. By setting the stiffness of the first weakened portion to be less than the stiffness of the reinforcing portion, the deformation resistance of the first weakened portion is weaker than the deformation resistance of the reinforcing portion, so that the first weakened portion is made more prone to deformation. This allows the first weakened portion to effectively absorb the deformation energy of the battery cell when the battery cell is subjected to internal and external impact forces and deforms. In this way, the first weakened portion can provide a certain buffering effect, thereby offering a degree of protection to the pressure relief portion located inside the reinforcing portion. Consequently, this can effectively reduce phenomena such as deformation or damage to the pressure relief portion of the pressure relief component when the battery cell is subjected to internal and external impact forces. This can effectively mitigate premature actuation of the pressure relief portion during use, thereby improving the operational stability and service life of the pressure relief component, and thus helping to improve the service life and reliability of the battery cell equipped with such a pressure relief component.

In some embodiments, a thickness of the first weakened portion is less than a thickness of the reinforcing portion.

In the foregoing technical solution, by setting the thickness of the first weakened portion to be less than the thickness of the reinforcing portion, the first weakened portion is made more prone to deformation compared to the reinforcing portion, so as to achieve that the stiffness of the first weakened portion that is less than the stiffness of the reinforcing portion. This approach features a simple structure and is easy to implement.

In some embodiments, the pressure relief component further includes a body portion, the first weakened portion connecting the body portion and the reinforcing portion; where the stiffness of the first weakened portion is less than stiffness of the body portion.

In the foregoing technical solution, the pressure relief component further includes the body portion, with the first weakened portion connected between the body portion and the reinforcing portion. By setting the stiffness of the first weakened portion to be less than the stiffness of the body portion, the pressure relief component forms a structure of which the stiffness decreases from the body portion to the first weakened portion and then increases to the reinforcing portion, so that the first weakened portion can form a buffer region that is more prone to deformation between the body portion and the reinforcing portion. This enhances the structural strength of the pressure relief component itself while further improving the protective effect on the pressure relief portion, thereby further mitigating phenomena such as deformation or damage to the pressure relief portion when the battery cell is subjected to internal and external impact forces.

In some embodiments, the thickness of the first weakened portion is less than a thickness of the body portion.

In the foregoing technical solution, by setting the thickness of the first weakened portion to be less than the thickness of the body portion, the first weakened portion is made more prone to deformation compared to the body portion, so as to achieve that the stiffness of the first weakened portion that is less than the stiffness of the body portion. This approach features a simple structure and is easy to implement.

In some embodiments, the thickness of the first weakened portion is D₁, and the thickness of the body portion is D₂, meeting 0.3D₂ ≤ D₁ ≤ 0.9D₂.

In the foregoing technical solution, by setting the thickness of the first weakened portion to be 0.3 to 0.9 times the thickness of the body portion, it can mitigate the risk of the overall structural strength of the pressure relief component being weak and prone to fracture due to an excessively small thickness of the first weakened portion, thereby enhancing the service life and reliability of the pressure relief component. Additionally, it can mitigate the poor effect of the first weakened portion in absorbing deformation energy when the battery cell is subjected to internal and external impact forces due to an excessively large thickness of the first weakened portion, thereby improving the buffering effect of the first weakened portion and improving the protective effect on the pressure relief portion of the pressure relief component.

In some embodiments, the thickness of the first weakened portion is D₁, and the thickness of the body portion is D₂, meeting 0.5D₂ ≤ D₁ ≤ 0.7D₂.

In the foregoing technical solution, by setting the thickness of the first weakened portion to be 0.5 to 0.7 times the thickness of the body portion, it can further mitigate the risk of the overall structural strength of the pressure relief component being weak and prone to fracture due to an excessively small thickness of the first weakened portion, thereby improving the service life and reliability of the pressure relief component, while also reducing the phenomenon of excessive material removal required for the first weakened portion, optimizing production rhythm and improving the production efficiency of the pressure relief component. Additionally, it can further mitigate the poor effect of the first weakened portion in absorbing deformation energy when the battery cell is subjected to internal and external impact forces due to an excessively large thickness of the first weakened portion, and reduce the phenomenon of excessive processing difficulty for the first weakened portion.

In some embodiments, the pressure relief component is provided with a first concave groove, and the pressure relief component forms the first weakened portion in a region in which the first concave groove is provided.

In the foregoing technical solution, by providing the first concave groove on the pressure relief component, the pressure relief component forms the first weakened portion of the pressure relief component in the region in which the first concave groove is provided. The pressure relief component with this structure facilitates the formation of the first weakened portion on the pressure relief component, which helps to reduce the manufacturing difficulty of forming the first weakened portion on the pressure relief component, thereby improving the production efficiency of the pressure relief component.

In some embodiments, the groove width of the first concave groove is W, meeting 0.5 mm ≤ W ≤ 10 mm.

In the foregoing technical solution, by setting the width of the first concave groove to be 0.5 mm to 10 mm, it can mitigate the phenomenon that the width of the first weakened portion is too small due to the too small groove width of the first concave groove, resulting in a poor effect of the first weakened portion absorbing deformation energy when the battery cell is subjected to internal and external impact forces and deforms, thereby improving the buffering effect of the first weakened portion and improving the protective effect on the pressure relief portion of the pressure relief component. Additionally, it can mitigate the phenomenon of the first weakened portion occupying excessive space on the pressure relief component due to an excessively large groove width of the first concave groove, resulting in a weak overall structural strength of the pressure relief component, thereby reducing the risk of fracture and other issues during use of the pressure relief component.

In some embodiments, the groove width of the first concave groove is W, meeting 2 mm ≤ W ≤ 5 mm.

In the foregoing technical solution, by setting the width of the first concave groove to be 2 mm to 5 mm, it can further mitigate the phenomenon that the width of the first weakened portion is too small due to the too small groove width of the first concave groove, resulting in a poor effect of the first weakened portion absorbing deformation energy when the battery cell is subjected to internal and external impact forces and deforms, and can also mitigate the phenomenon of excessive processing difficulty of the first concave groove due to the too small groove width of the first concave groove. Additionally, it can further mitigate the phenomenon of the first weakened portion occupying excessive space on the pressure relief component due to an excessively large groove width of the first concave groove, resulting in a weak overall structural strength of the pressure relief component, while also reducing the processing scope of the first concave groove, optimizing production rhythm and improving the production efficiency of the pressure relief component.

In some embodiments, the first concave groove is provided on the side of the pressure relief component facing the interior of the battery cell.

In the foregoing technical solution, by providing the first concave groove on the pressure relief component on the side facing the interior of the battery cell, it can reduce the phenomenon of dirt accumulation in the first concave groove on the pressure relief component during use.

In some embodiments, the first concave groove is provided on a side of the pressure relief component facing away from the interior of the battery cell.

In the foregoing technical solution, by providing the first concave groove on the pressure relief component on the side facing away from the interior of the battery cell, it facilitates the processing and formation of the first concave groove on the pressure relief component from the outside, which helps to reduce the difficulty of providing the first concave groove on the pressure relief component, thereby improving processing efficiency.

In some embodiments, the first concave groove is provided on two sides of the pressure relief component.

In the foregoing technical solution, by providing the first concave groove on each of two sides of the pressure relief component, the pressure relief component is thinned from the two sides to form the first weakened portion. This structure can reduce the processing depth of providing the first concave groove on one side of the pressure relief component, which helps to reduce the difficulty of forming the first weakened portion on the pressure relief component. Additionally, this structure facilitates material flow during the formation of the first concave groove, which helps to improve the processing quality of the first concave groove.

In some embodiments, a protrusion is formed on a side of the pressure relief component facing away from the first concave groove and corresponding to a position of the first concave groove.

In the foregoing technical solution, by forming the protrusion on the side of the pressure relief component facing away from the first concave groove and corresponding to the position of the first concave groove, the first concave groove can be formed through a stamping process, so that the first weakened portion can be formed in the region of the pressure relief component corresponding to the first concave groove, which facilitates the formation of the first weakened portion and helps to improve processing efficiency.

In some embodiments, along a thickness direction of the first weakened portion, a projection of the protrusion covers a portion of the groove bottom surface of the first concave groove.

In the foregoing technical solution, by making the projection of the protrusion along the thickness direction of the first weakened portion cover only a portion of the groove bottom surface of the first concave groove, the protrusion and the first concave groove form a mutually offset structure, so that the first weakened portion formed in a region in which the pressure relief component is provided with the first concave groove forms a stepped structure with varying thickness, which is beneficial to the deformation of the first weakened portion and the absorption of internal and external impact forces on the battery cell.

In some embodiments, the groove width of the first concave groove is W, and along a groove width direction of the first concave groove, a dimension of a portion of the first weakened portion not forming the protrusion is L, meeting 0.1W ≤ L ≤ 0.5W.

In the foregoing technical solution, by setting the dimension of the portion of the first weakened portion not forming the protrusion along the groove width direction of the first concave groove to be 0.1 to 0.5 times the groove width of the first concave groove, it can mitigate the poor effect of the first weakened portion in absorbing internal and external impact forces on the battery cell due to an excessively small proportion leading to too much area of the first weakened portion forming the protrusion. Additionally, it can mitigate the phenomenon of excessive deviation between the protrusion and the first concave groove due to an overly large proportion, which would increase the stamping difficulty of the first concave groove.

In some embodiments, the first weakened portion is an annular structure extending along a circumferential direction of the reinforcing portion.

In the foregoing technical solution, by setting the first weakened portion as an annular structure extending along the circumferential direction of the reinforcing portion, the first weakened portion is structured to surround the reinforcing portion, so that the first weakened portion can absorb impact forces transmitted from all directions to the pressure relief component, which helps to improve the protective effect of the first weakened portion on the pressure relief portion of the pressure relief component.

In some embodiments, a dimension of the pressure relief component in a first direction is less than a dimension of the pressure relief component in a second direction, the first direction, the second direction, and the thickness direction of the pressure relief component being pairwise perpendicular; where along the first direction, at least one side of the reinforcing portion is provided with the first weakened portion.

In the foregoing technical solution, the dimension of the pressure relief component in the first direction is less than its dimension in the second direction, resulting in a structure of which the pressure relief portion of the pressure relief component is farther from an edge of the pressure relief component in the second direction, experiencing less impact force, while the pressure relief portion is more affected by impact forces in the first direction. Therefore, by providing the first weakened portion on at least one side of the reinforcing portion in the first direction to reduce the impact force on the pressure relief portion of the pressure relief component in the first direction, there is no need to surround the entire outer side of the reinforcing portion with the first weakened portion, which helps to reduce processing costs and enhance the overall structural strength of the pressure relief component.

In some embodiments, along the first direction, the first weakened portion is provided on each of two sides of the reinforcing portion.

In the foregoing technical solution, by providing the first weakened portion on two sides of the reinforcing portion along the first direction, the pressure relief portion of the pressure relief component is provided with the first weakened portion on the two sides in the direction of which it is more affected by impact forces, which helps to further reduce the impact on the pressure relief portion of the pressure relief component when the battery cell is subjected to internal and external impact forces.

In some embodiments, a length of the first weakened portion in the second direction is greater than a dimension of the pressure relief portion in the second direction.

In the foregoing technical solution, by setting the length of the first weakened portion in the second direction to be greater than the dimension of the pressure relief portion in the second direction, it can effectively block the impact force received by the pressure relief portion in the first direction, thereby improving the protective effect of the first weakened portion on the pressure relief portion.

In some embodiments, along the second direction, two ends of the first weakened portion extend to two ends of the pressure relief component, respectively.

In the foregoing technical solution, by setting the two ends of the first weakened portion in the second direction to extend to the two ends of the pressure relief component, respectively, it can further block the impact force transmitted to the pressure relief portion from the first direction, thereby further improving the protective effect of the first weakened portion on the pressure relief portion. Additionally, it facilitates the manufacturing of the first weakened portion, which helps to reduce the processing difficulty and cost of forming the first weakened portion on the pressure relief component.

In some embodiments, along the thickness direction of the pressure relief component, a second concave groove is formed on the side of the pressure relief component facing away from the interior of the battery cell, and a convex portion is formed on the other side at a position corresponding to the second concave groove; where a groove bottom wall of the second concave groove includes the pressure relief portion.

In the foregoing technical solution, by providing the second concave groove on the side of the pressure relief component facing away from the interior of the battery cell, with the groove bottom wall of the second concave groove including the pressure relief portion, in other words, the pressure relief portion being formed on the groove bottom wall of the second concave groove, the second concave groove can provide a certain protective effect on the pressure relief portion, which reduces wear or damage to the pressure relief portion under external environmental effects, thereby facilitating an improvement in the service life of the pressure relief component.

In some embodiments, the reinforcing portion encloses a groove sidewall of the second concave groove, and along a radial direction of the reinforcing portion, the first weakened portion is connected to an outer side of the reinforcing portion.

In the foregoing technical solution, by setting the reinforcing portion to enclose the groove sidewall of the second concave groove, in other words, the entire groove sidewall of the second concave groove being formed by the reinforcing portion, the first weakened portion and the reinforcing portion are arranged along the radial direction of the reinforcing portion, facilitating manufacturing and processing.

In some embodiments, the pressure relief component further includes a body portion, the first weakened portion connecting the body portion and the reinforcing portion, and the stiffness of the first weakened portion being less than stiffness of the body portion; where the groove sidewall of the second concave groove includes the first weakened portion, and along the thickness direction of the pressure relief component, the first weakened portion is connected between the body portion and the reinforcing portion.

In the foregoing technical solution, the groove sidewall of the second concave groove includes the first weakened portion, so that the first weakened portion is formed on the groove sidewall of the second concave groove. As a result, the reinforcing portion, the first weakened portion, and the body portion are structured to be arranged along the thickness direction of the pressure relief component. This allows the first weakened portion to better absorb the impact force transmitted from the body portion to the reinforcing portion, and helps to further improve the protective effect of the first weakened portion on the pressure relief portion of the pressure relief component.

In some embodiments, the pressure relief portion is integrally formed with the reinforcing portion, the pressure relief component is provided with a score groove, the pressure relief component forms the pressure relief portion in a region in which the score groove is provided, and the pressure relief component is capable of rupturing along the score groove when the battery cell relieves pressure.

In the foregoing technical solution, by providing the score groove on the pressure relief component, the region of the pressure relief component in which the score groove is provided forms the pressure relief portion for pressure relief, allowing the pressure relief portion and the reinforcing portion to form an integrally molded structure. This structure of the pressure relief component helps to enhance the connection stability between the pressure relief portion and the reinforcing portion, and reduce the risk of the pressure relief portion detaching during use, thereby effectively improving the operational stability and reliability of the pressure relief component.

In some embodiments, the pressure relief component further includes a second weakened portion, the reinforcing portion being connected to the pressure relief portion via the second weakened portion, and a thickness of the second weakened portion being less than the thickness of the reinforcing portion and greater than the thickness of the pressure relief portion.

In the foregoing technical solution, by providing the second weakened portion between the pressure relief portion and the reinforcing portion, with the thickness of the second weakened portion being less than the thickness of the reinforcing portion and greater than the thickness of the pressure relief portion, the structure from the reinforcing portion to the pressure relief portion has a gradually decreasing thickness. This facilitates the provision of a score groove on the pressure relief component to form the pressure relief portion, which helps to reduce the processing difficulty of the score groove on the pressure relief component. Additionally, this allows the second weakened portion to further provide a certain buffering effect between the pressure relief portion and the reinforcing portion, which mitigates the phenomenon of stress from the reinforcing portion directly acting on the pressure relief portion, thereby facilitating a reduction in the risk of cracking or damage to the pressure relief portion during use, and enhancing the operational stability and reliability of the pressure relief portion.

In some embodiments, along the thickness direction of the pressure relief component, the pressure relief component has a first surface, a first groove being provided on the first surface; where the groove bottom surface of the first groove is provided with the score groove, an extension direction of the first groove is the same as an extension direction of the score groove, and the groove bottom wall of the first groove includes the second weakened portion.

In the foregoing technical solution, the first groove is provided on the first surface of the pressure relief component, and the score groove is provided on the groove bottom surface of the first groove. The extension direction of the score groove is set to be consistent with the extension direction of the first groove, in other words, the region of the pressure relief component for providing the score groove is first provided with the first groove having the same extension direction as the score groove, so that the score groove can be provided on the groove bottom surface of the first groove, the local region of the pressure relief component can be thinned before the score groove is provided. Additionally, the second weakened portion with reduced thickness can be formed by providing the first groove, which is easy to implement. The pressure relief component with this structure can reduce the depth of providing the score groove on the pressure relief component, which helps to reduce the manufacturing difficulty and equipment requirements for processing the score groove on the pressure relief component, thereby lowering manufacturing costs. Additionally, the pressure relief component with this structure can reduce the forming force experienced by the pressure relief component during the processing of the score groove, which helps to reduce the risk of cracks in the pressure relief component, thereby improving the production quality of the pressure relief component.

In some embodiments, the first groove and the score groove are both annular grooves.

In the foregoing technical solution, by setting both the first groove and the score groove as annular groove structures, the pressure relief portion and the second weakened portion are both annular structures. The pressure relief component with this structure makes the shape of the first groove identical to the shape of the score groove, and thus only the region of the pressure relief component in which the score groove is to be provided requires to be locally thinned, which helps to reduce the processing difficulty of the first groove and minimize the processing scope of the first groove Additionally, by providing the annular score groove, when the pressure relief component releases the internal pressure of the battery cell, the region inside the score groove can detach entirely after the pressure relief component ruptures along the score groove, which helps to increase the pressure relief area and rate of the pressure relief component.

In some embodiments, along the thickness direction of the pressure relief component, the first surface is provided facing away from the interior of the battery cell.

In the foregoing technical solution, by setting the first surface as the surface of the pressure relief component facing away from the interior of the battery cell, the score groove is provided on the side of the pressure relief component facing away from the interior of the battery cell, which helps to reduce the processing difficulty of the score groove and facilitates the formation of the score groove on the pressure relief component.

In some embodiments, along the thickness direction of the pressure relief component, the pressure relief component has a second surface opposite the first surface, a second groove being provided at a position in which the second surface corresponds to the first groove, and an extension direction of the second groove being the same as the extension direction of the first groove.

In the foregoing technical solution, the pressure relief component also has a second surface opposite the first surface. By providing the second groove at a position on the second surface corresponding to the first groove with the same extension direction as the first groove, the region of the pressure relief component for providing the score groove can be locally thinned through the first groove and the second groove. This allows the formation of the second weakened portion by thinning from the two sides of the pressure relief component via the first groove and the second groove, which facilitates operation and processing and helps to reduce the processing difficulty of forming the second weakened portion on the pressure relief component. Additionally, this can improve the material flow during the formation of the score groove, and facilitate the flow of material generated during the formation of the score groove, thereby enhancing the structural consistency of the score groove.

In some embodiments, the pressure relief portion is provided separately from the reinforcing portion, the pressure relief portion is mounted on the reinforcing portion, the pressure relief portion is provided with a score groove, and the pressure relief portion is capable of rupturing along the score groove when the battery cell relieves pressure.

In the foregoing technical solution, by setting the pressure relief portion and the reinforcing portion as separately provided structures, and by providing the score groove on the pressure relief portion, the pressure relief portion can rupture along the score groove to release the internal pressure of the battery cell. This structure helps to reduce the difficulty of providing the pressure relief portion on the pressure relief component, thereby lowering the manufacturing difficulty of the pressure relief component and improving the production efficiency of the pressure relief component.

According to a second aspect, an embodiment of this application further provides a battery cell including the pressure relief component described above, the pressure relief component being configured to release the internal pressure of the battery cell.

In some embodiments, the battery cell further includes a housing, the housing having a wall portion, and the pressure relief component being the wall portion.

In the foregoing technical solution, the housing has a wall portion, and the pressure relief component is the wall portion of the housing, meaning that the pressure relief component is one wall of the housing, so that the first weakened portion of the pressure relief component can effectively absorb the deformation energy generated by the housing of the battery cell when the housing deforms, thereby protecting the pressure relief portion.

In some embodiments, the battery cell further includes a housing, the housing having a wall portion, the wall portion having a pressure relief hole, and the pressure relief component being mounted on the wall portion and covering the pressure relief hole.

In the foregoing technical solution, the housing has a wall portion, and the pressure relief component is mounted on the wall portion and covers the pressure relief hole of the wall portion, meaning that the pressure relief component and the housing are separately provided structures, and the pressure relief component is an independent component mounted on one wall of the housing. This structure helps to reduce the difficulty in assembling the pressure relief component and the housing, thereby improving the production efficiency of the battery cell.

In some embodiments, the housing includes a shell and an end cover; the shell having an accommodation cavity with an opening formed inside, the accommodation cavity being configured to accommodate an electrode assembly; and the end cover closing the opening; where the end cover is the wall portion.

In the foregoing technical solution, by setting the wall portion of the housing as the end cover configured to close the opening of the shell of the housing, the battery cell with this structure facilitates the mounting of the pressure relief component or the formation of the pressure relief portion and the first weakened portion on the end cover, thereby effectively reducing the processing difficulty of the battery cell and improving the production efficiency of the battery cell.

In some embodiments, the housing includes a shell and an end cover; the shell having an accommodation cavity with an opening formed inside, the accommodation cavity being configured to accommodate an electrode assembly; and the end cover closing the opening; where the shell includes the wall portion.

In the foregoing technical solution, by setting the wall portion of the housing as one wall of the shell, the battery cell with this structure can reduce the impact of stress generated by the connection between the end cover and the shell on the pressure relief portion, thereby reducing phenomena such as cracking of the pressure relief portion and the first weakened portion, and consequently improving the operational stability and service life of the battery cell.

According to a third aspect, an embodiment of this application further provides a battery including the battery cell described above.

According to a fourth aspect, an embodiment of this application further provides an electrical apparatus including the battery described above.

### DESCRIPTION OF THE DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded structural view of a battery according to some embodiments of this application;
FIG. 3 is a schematic structural diagram of a battery cell according to some embodiments of this application;
FIG. 4 is an exploded structural view of a battery cell according to some embodiments of this application;
FIG. 5 is a cross-sectional view of a pressure relief component of a battery cell according to some embodiments of this application;
FIG. 6 is a partial enlarged view at circle A of the pressure relief component of the battery cell shown in FIG. 5;
FIG. 7 is a bottom view of a pressure relief component of a battery cell according to some embodiments of this application;
FIG. 8 is a cross-sectional view of a pressure relief component of a battery cell according to some other embodiments of this application;
FIG. 9 is a partial enlarged view at circle B of the pressure relief component of the battery cell shown in FIG. 8;
FIG. 10 is a schematic structural diagram of a battery cell according to some further embodiments of this application;
FIG. 11 is a cross-sectional view of a pressure relief component of a battery cell according to some further embodiments of this application;
FIG. 12 is a partial enlarged view at circle C of the pressure relief component of the battery cell shown in FIG. 11;
FIG. 13 is a bottom view of a pressure relief component of a battery cell in other embodiments according to some embodiments of this application; and
FIG. 14 is a bottom view of a pressure relief component of a battery cell in further embodiments according to some embodiments of this application.

Reference signs are described as follows: 1000: vehicle; 100: battery; 10: box; 11: first box body; 12: second box body; 20: battery cell; 21: housing; 211: shell; 2111: opening; 2112: first wall; 2113: second wall; 212: end cover; 213: wall portion; 22: electrode assembly; 221: tab; 23: electrode terminal; 24: pressure relief component; 241: pressure relief portion; 242: reinforcing portion; 2421: strip segment; 2422: arc segment; 243: first weakened portion; 244: first concave groove; 245: body portion; 246: protrusion; 247: second concave groove; 248: convex portion; 249: score groove; 250: second weakened portion; 251: first surface; 252: first groove; 253: second surface; 254: second groove; 255: protruding portion; 200: controller; 300: motor; X: thickness direction of pressure relief component; Y: first direction; and Z: second direction.

### DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In the embodiments of this application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two back-to-back surfaces in a thickness direction of the positive electrode current collector, and the positive electrode active material is arranged on either or both of the two back-to-back surfaces of the positive electrode current collector.

In an example, the positive electrode current collector may be a metal foil or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium-containing phosphates may include but are not limited to at least one of lithium iron phosphate (for example, LiFePO4 (LFP for short)), a composite material of lithium iron phosphate and carbon, lithium manganese phosphate (for example, LiMnPO4), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector.

In an example, the negative electrode current collector may be a metal foil, a foam metal, or a composite current collector. For example, as the metal foil, the negative electrode current collector may use silver surface-treated aluminum or stainless steel, stainless steel, copper, aluminum, nickel, baked carbon, carbon, nickel, or titanium. The foamed metal may be foamed nickel, foamed copper, foamed aluminum, foamed alloy, foamed carbon, and the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector includes two opposite surfaces in its thickness direction, and the negative electrode active material is disposed on either or both of the two opposite surfaces of the negative electrode current collector.

In an example, the negative electrode active material may be a negative electrode active material for battery cells well-known in the art. In an example, the negative electrode active material may include at least one of the following materials: artificial graphite, natural graphite, soft carbon, hard carbon, a silicon-based material, a tin-based material, lithium titanate, or the like.

In some embodiments, the material of the positive electrode current collector may be aluminum, and the material of the negative electrode current collector may be copper.

In some embodiments, the electrode assembly further includes a separator, the separator being disposed between the positive electrode and the negative electrode.

In some embodiments, the separator is an isolating film. The isolating film may have various types and may be any well-known porous isolating film with good chemical stability and mechanical stability.

In an example, major materials of the isolating film may be selected from at least one of glass fiber, non-woven fabric, polyethylene, polypropylene, polyvinylidene fluoride, or ceramics.

In some embodiments, the separator is a solid electrolyte. The solid electrolyte is arranged between the positive electrode and the negative electrode, and plays the roles of transporting ions and isolating the positive electrode and the negative electrode.

In some embodiments, the battery cell further includes an electrolyte, where the electrolyte conducts ions between the positive electrode and the negative electrode. The electrolyte may be in a liquid state, a gel state, or a solid state.

In some embodiments, the electrode assembly is a wound structure. The positive electrode plate and the negative electrode plate are wound into a wound structure.

In some embodiments, the electrode assembly is a laminated structure.

In some embodiments, the shape of the electrode assembly may be cylindrical, flat, prismatic, or the like.

In some embodiments, the electrode assembly is provided with tabs, the tabs being capable of conducting current from the electrode assembly. The tabs include a positive tab and a negative tab.

In some embodiments, the battery cell may include a housing. The housing is configured to encapsulate the electrode assembly, the electrolyte, and other components. The housing may be steel housing, aluminum housing, plastic housing (for example, polypropylene), composite metal housing (for example, copper-aluminum composite housing), aluminum-plastic film, or the like.

In an example, the battery cell may be a cylindrical battery cell, a prismatic battery cell, or a battery cell of another shape. The prismatic battery cell includes but is not limited to a square-housing battery cell, a blade battery cell, and a polygonal battery, such as a hexagonal battery.

The battery mentioned in the embodiments of this application is a single physical module that includes one or more battery cells for providing a higher voltage and capacity.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

Batteries have outstanding advantages such as high energy density, low environmental pollution, high power density, long service life, wide adaptability, and low self-discharge coefficient, making them a crucial component of contemporary new energy development. With the rapid development and increasing demand for batteries, the requirements for batteries in terms of service life and reliability have also increased.

In battery technologies, for general battery cells, to ensure their safety during use, a pressure relief component is typically provided on the battery cell to release internal pressure through the pressure relief component, thereby effectively enhancing the safety of the battery cell during use. In related technologies, the pressure relief component is usually formed on the housing using an integral molding process, that is, integrated into the housing of the battery cell, or connected to the housing through welding, snapping, or other methods, so that the pressure relief component can actuate and open when the internal pressure or temperature of the battery cell reaches a threshold, so as to relieve the internal pressure of the battery cell. However, during use, when the battery cell is subjected to internal and external impact forces, for example, internal impact from the expansion of the electrode assembly or external impact from collisions, it causes deformation of the housing, resulting in the deformation energy of the housing directly acting on the pressure relief component, posing a risk of deformation or damage to the pressure relief component. This leads to poor operational stability of the pressure relief component, easily causing premature actuation of the pressure relief component during use, which is detrimental to improving the service life and reliability of the battery cell.

Based on the above considerations, to address the issues of short service life and low reliability of battery cells, the embodiments of this application provide a pressure relief component for a battery cell, the pressure relief component including a pressure relief portion, a reinforcing portion, and a first weakened portion. The pressure relief portion is configured to rupture when the battery cell relieves pressure, so as to release the internal pressure of the battery cell. The reinforcing portion is connected to the pressure relief portion, and the reinforcing portion is arranged around the pressure relief portion. The first weakened portion is connected to the pressure relief portion via the reinforcing portion, stiffness of the first weakened portion being less than stiffness of the reinforcing portion.

In a battery cell with such a pressure relief component, the pressure relief component is provided with the pressure relief portion, the reinforcing portion, and the first weakened portion that are sequentially connected, and the reinforcing portion is arranged around the pressure relief portion, so that the pressure relief portion is structured to be connected to the first weakened portion through the reinforcing portion. By setting the stiffness of the first weakened portion to be less than the stiffness of the reinforcing portion, the deformation resistance of the first weakened portion is weaker than the deformation resistance of the reinforcing portion, so that the first weakened portion is made more prone to deformation. This allows the first weakened portion to effectively absorb the deformation energy of the battery cell when the battery cell is subjected to internal and external impact forces and deforms. In this way, the first weakened portion can provide a certain buffering effect, thereby offering a degree of protection to the pressure relief portion located inside the reinforcing portion. Consequently, this can effectively reduce phenomena such as deformation or damage to the pressure relief portion of the pressure relief component when the battery cell is subjected to internal and external impact forces. This can effectively mitigate premature actuation of the pressure relief portion during use, thereby improving the operational stability and service life of the pressure relief component, and thus helping to improve the service life and reliability of the battery cell.

The pressure relief component disclosed in the embodiments of this application may be, but is not limited to, used in batteries of electrical apparatuses such as vehicles, ships, or aircraft. A power supply system for such an electrical apparatus can be constituted using the battery cells and batteries disclosed in this application, which helps to mitigate the phenomenon of premature valve opening and pressure relief during the use of battery cells, thereby improving the service life and reliability of the battery cells.

An embodiment of this application provides an electrical apparatus that uses a battery as a power source. The electrical apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electrical apparatus according to an embodiment of this application being a vehicle 1000 is used as an example for description of the following embodiments.

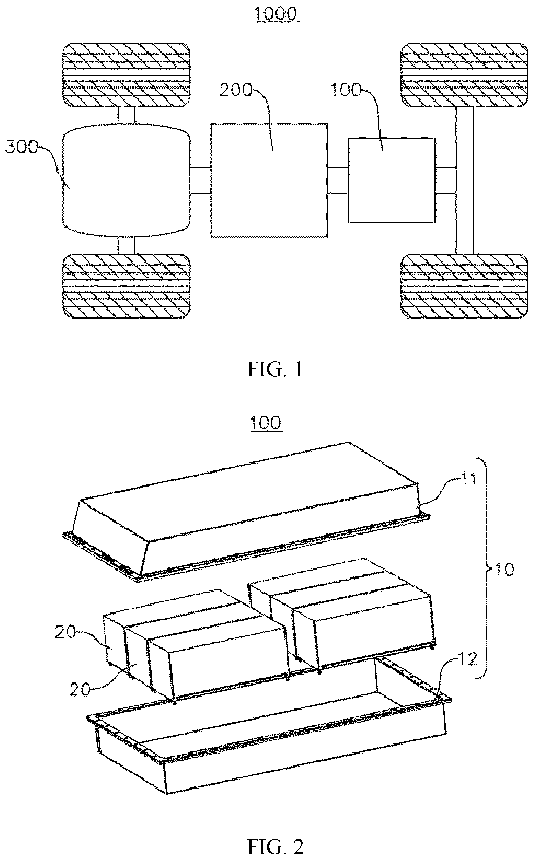

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

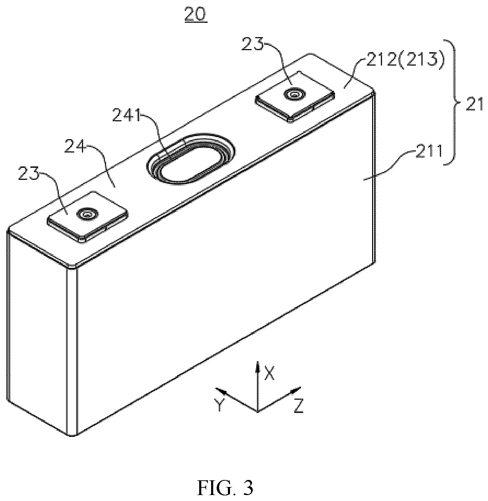

Referring to FIG. 2 and FIG. 3, FIG. 2 is an exploded structural view of a battery 100 according to some embodiments of this application, and FIG. 3 is a schematic structural diagram of a battery cell 20 according to some embodiments of this application. The battery 100 may include a box 10 and battery cells 20, with the battery cells 20 being accommodated within the box 10.

The box 10 is configured to provide an assembly space for the battery cells 20, and the box 10 may be a variety of structures. In some embodiments, the box 10 may include a first box body 11 and a second box body 12, the first box body 11 and the second box body 12 being mutually covered, and the first box body 11 and the second box body 12 together defining an assembly space for accommodating the battery cells 20. The second box body 12 may be a hollow structure with an open end, the first box body 11 may be a plate-like structure, and the first box body 11 covers the open side of the second box body 12, so that the first box body 11 and the second box body 12 together define the assembly space. Certainly, the structure of the box 10 is not limited thereto. The first box body 11 and the second box body 12 may alternatively both be hollow structures with an open side, with the open side of the first box body 11 covering the open side of the second box body 12. Similarly, the box 10 formed by the first box body 11 and the second box body 12 may have various shapes, such as a cylinder or a cuboid. In an example, in FIG. 2, the box 10 is a cuboid structure.

Optionally, in the battery 100, the battery cell 20 accommodated within the box 10 may be provided in one or provided in plurality. When there are a plurality of battery cells 20 accommodated within the box 10, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entire module formed by the plurality of battery cells 20 is accommodated within the box 10. Certainly, in some embodiments, the battery 100 may alternatively be formed by first connecting a plurality of battery cells 20 in series, parallel, or series-parallel to form a battery module, and then a plurality of battery modules are connected in series, parallel, or series-parallel to form an entirety, which is accommodated within the box 10.

In some embodiments, the battery 100 may further include other structures. For example, the battery 100 may further include a busbar, the busbar connecting a plurality of battery cells 20 to achieve electrical connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat, cuboid, or other shapes. In an example, in FIG. 3, the battery cell 20 is a cuboid structure.

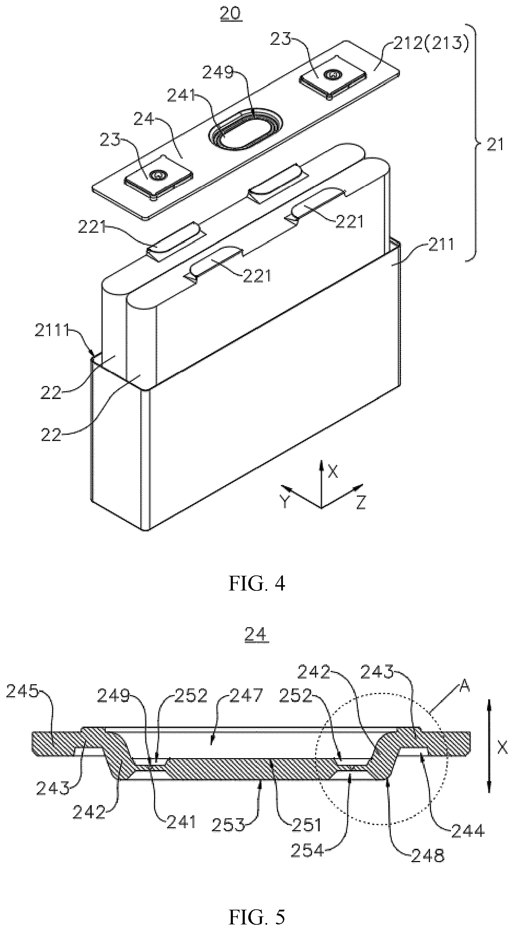

Referring to FIG. 3, and further referring to FIG. 4, FIG. 4 is an exploded structural view of a battery cell 20 according to some embodiments of this application. The battery cell 20 includes a housing 21 and an electrode assembly 22, with the electrode assembly 22 being accommodated within the housing 21.

The housing 21 may alternatively be configured to accommodate an electrolyte, such as an electrolytic solution. The housing 21 may have various structures, such as a cylinder, cuboid, or prismatic structure. Similarly, the housing 21 may also be made of various materials, such as copper, iron, aluminum, steel, or aluminum alloy.

In some embodiments, the housing 21 may include a shell 211 and an end cover 212, the shell 211 having an accommodation cavity formed inside, and the accommodation cavity being configured to accommodate the electrode assembly 22 and having an opening 2111. In other words, the shell 211 is a hollow structure with an opening 2111 at one end, and the end cover 212 covers the opening 2111 of the shell 211 to form a sealed connection, so as to form a sealed space for accommodating the electrode assembly 22 and the electrolyte.

During assembling of the battery cell 20, the electrode assembly 22 may be first placed into the shell 211, and the shell 211 may be filled with an electrolytic solution, after which the end cover 212 is covered onto the opening 2111 of the shell 211 to complete the assembly of the battery cell 20.

The shell 211 may have various shapes, such as a cylinder, cuboid, or prismatic structure. The shape of the shell 211 may be determined based on the specific shape of the electrode assembly 22. For example, if the electrode assembly 22 is a cylindrical structure, a cylindrical shell 211 may be selected; if the electrode assembly 22 is a cuboid structure, a cuboid shell 211 may be selected. Certainly, the end cover 212 may also have various structures, for example, the end cover 212 may be a plate-like structure or a hollow structure with an open end. In an example, in FIG. 4, the shell 211 is a cuboid structure.

Certainly, it is understandable that the housing 21 is not limited to the above structure, and the housing 21 may also have other structures. For example, the housing 21 may include a shell 211 and two end covers 212, the shell 211 being a hollow structure with openings 2111 on opposite sides, one end cover 212 corresponding to and covering one opening 2111 of the shell 211 and forming a sealed connection to form a sealed space for accommodating the electrode assembly 22 and the electrolyte. In other words, the shell 211 has openings 2111 formed on opposite sides, and the two end covers 212 respectively cover the two sides of the shell 211 to close the corresponding openings 2111.

It should be noted that the electrode assembly 22 is a component in the battery cell 20 in which electrochemical reactions occur. The electrode assembly 22 may have various structures. For example, the electrode assembly 22 may be a wound structure formed by winding a positive electrode plate, a separator, and a negative electrode plate, or may be a stacked structure formed by stacking a positive electrode plate, a separator, and a negative electrode plate.

In an example, the separator is an isolating film, and the main material of the isolating film may be selected from at least one of glass fiber, non-woven fabric, polyethylene, polypropylene, and polyvinylidene fluoride.

Optionally, the electrode assembly 22 accommodated within the housing 21 may be provided in one or may be provided in plurality. In an example, in FIG. 4, the housing 21 of the battery cell 20 is provided with two electrode assemblies 22, the two electrode assemblies 22 being stacked along their thickness direction, to be specific, the two electrode assemblies 22 are stacked along the thickness direction of the battery cell 20. Certainly, in other embodiments, the number of electrode assemblies 22 accommodated within the housing 21 may alternatively be one, three, four, five, six, seven, eight, or the like.

In some embodiments, the battery cell 20 may further include electrode terminals 23, the electrode terminals 23 being insulatedly mounted on the housing 21 and electrically connected to the electrode assembly 22 to output or input electrical energy of the battery cell 20.

It should be noted that the electrode terminals 23 are insulatedly mounted on the housing 21, in other words, no electrical connection is formed between the electrode terminals 23 and the housing 21.

In FIG. 3, the battery cell 20 includes two electrode terminals 23, correspondingly, each electrode assembly 22 has two tabs 221 with opposite polarities, and the two electrode terminals 23 are respectively electrically connected to the two tabs 221 of the electrode assembly 22, so as to achieve the input or output of the positive electrode and the negative electrode of the battery cell 20. It should be noted that the tabs 221 of the electrode assembly 22 are components formed by stacking and connecting regions of the positive electrode plate not coated with a positive electrode active material layer or regions of the negative electrode plate not coated with a negative electrode active material layer. If the tab 221 is configured to output the positive electrode of the electrode assembly 22, the tab 221 is a component formed by stacking and connecting regions of the positive electrode plate not coated with a positive electrode active material layer; and if the tab 221 is configured to output the negative electrode of the electrode assembly 22, the tab 221 is a component formed by stacking and connecting regions of the negative electrode plate not coated with a negative electrode active material layer.

In an example, the electrode terminals 23 may be made of various materials. For example, the electrode terminals 23 may be made of copper, iron, aluminum, steel, aluminum alloy, or the like.

It can be understood that the electrode terminals 23 mounted on the housing 21 may have various structures. In an example, in FIG. 3 and FIG. 4, two electrode terminals 23 are both mounted on the end cover 212 of the housing 21. Certainly, the structure of the battery cell 20 is not limited thereto. In other embodiments, two electrode terminals 23 may alternatively be mounted on the shell 211 of the housing 21, similarly, the two electrode terminals 23 may alternatively be such that one electrode terminal 23 is mounted on the shell 211 of the housing 21, and the other electrode terminal 23 is mounted on the end cover 212 of the housing 21. In some embodiments, as shown in FIG. 3, the battery cell 20 may further include a pressure relief mechanism, the pressure relief mechanism being provided on the housing 21, the pressure relief mechanism being configured to release the internal pressure of the battery cell 20 when the internal pressure or temperature of the battery cell 20 reaches a predetermined value.

According to some embodiments of this application, as shown in FIG. 3 and FIG. 4, the battery cell 20 may further include a pressure relief component 24, the pressure relief component 24 being provided on the housing 21, and the pressure relief component 24 being configured to release the internal pressure of the battery cell 20 when the internal pressure or temperature of the battery cell 20 reaches a threshold.

The pressure relief component 24 may have various structures, the pressure relief component 24 may be a structure provided separately from the housing 21, or the pressure relief component 24 may be one wall of the housing 21. When the pressure relief component 24 is a structure provided separately from the housing 21, in other words, the housing 21 is provided with a pressure relief hole for mounting the pressure relief component 24, and the pressure relief component 24 is connected to the housing 21 and covers the pressure relief hole, the pressure relief component 24 and the housing 21 may be connected in various manners, such as welding or snapping. Similarly, the pressure relief component 24 may be mounted on the end cover 212 of the housing 21 or on the shell 211 of the housing 21. When the pressure relief component 24 is one wall of the housing 21, to be specific, when the pressure relief component 24 is integrated into the housing 21 and forms one wall of the housing 21, the pressure relief component 24 may be the end cover 212 of the housing 21 or may be one wall of the shell 211 of the housing 21.

In an example, in FIG. 3 and FIG. 4, the pressure relief component 24 is the end cover 212 of the housing 21, meaning that the pressure relief component 24 is integrated with the end cover 212, so that the pressure relief component 24 can close the opening 2111 of the shell 211, and the two electrode terminals 23 are mounted on the pressure relief component 24.

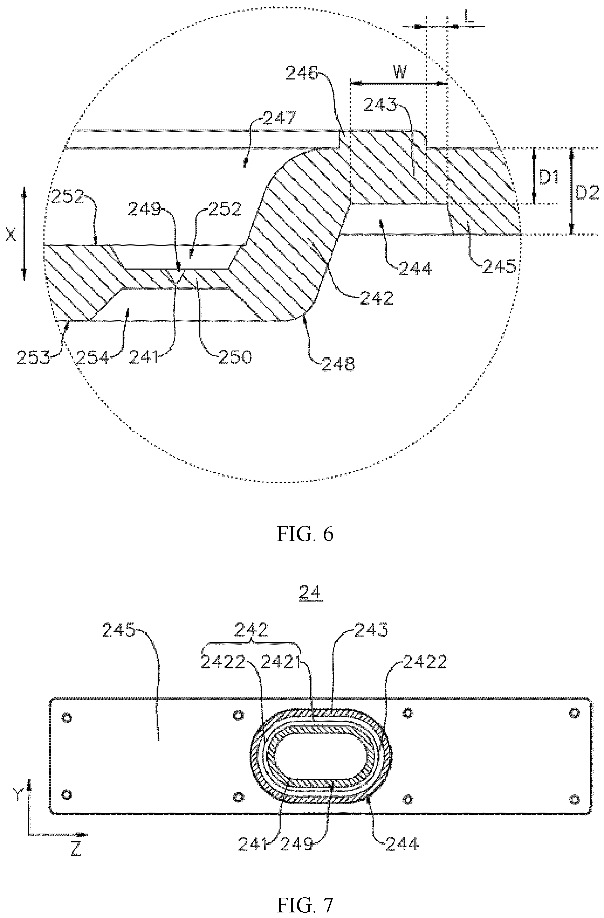

According to some embodiments of this application, referring to FIG. 3 and FIG. 4, and further referring to FIG. 5, FIG. 6, and FIG. 7, FIG. 5 is a cross-sectional view of a pressure relief component 24 of a battery cell 20 according to some embodiments of this application, FIG. 6 is a partial enlarged view at A of the pressure relief component 24 of the battery cell 20 shown in FIG. 5, and FIG. 7 is a bottom view of a pressure relief component 24 of a battery cell 20 according to some embodiments of this application. This application provides a pressure relief component 24 applied to a battery cell 20, the pressure relief component 24 including a pressure relief portion 241, a reinforcing portion 242, and a first weakened portion 243. The pressure relief portion 241 is configured to rupture when the battery cell 20 relieves pressure, so as to release the internal pressure of the battery cell 20. The reinforcing portion 242 is connected to the pressure relief portion 241, and the reinforcing portion 242 is arranged around the pressure relief portion 241. The first weakened portion 243 is connected to the pressure relief portion 241 via the reinforcing portion 242, stiffness of the first weakened portion 243 being less than stiffness of the reinforcing portion 242.

The pressure relief portion 241 of the pressure relief component 24 serves to relieve pressure, and is configured to be capable of being destroyed and rupturing when the internal pressure or temperature of the battery cell 20 reaches a predetermined value to release the internal pressure of the battery cell 20. The pressure relief portion 241 and the reinforcing portion 242 may be an integral structure. To be specific, the pressure relief portion 241 is a weakened structure formed on the pressure relief component 24 that ruptures when the battery cell 20 relieves pressure, and the reinforcing portion 242 is a structure surrounding and connected to the pressure relief portion 241. Certainly, the pressure relief portion 241 and the reinforcing portion 242 may alternatively be separate structures, with the pressure relief portion 241 being connected to the reinforcing portion 242 through processes such as welding. If the pressure relief portion 241 and the reinforcing portion 242 are separate structures, the pressure relief portion 241 may be a component such as an explosion-proof valve, explosion-proof disc, gas valve, pressure relief valve, or safety valve.

The reinforcing portion 242 is arranged around the pressure relief portion 241, that is, the reinforcing portion 242 is an annular structure with ends connected, surrounding the outer side of the pressure relief portion 241.

The first weakened portion 243 is connected to the pressure relief portion 241 via the reinforcing portion 242, meaning that the pressure relief portion 241 and the first weakened portion 243 are connected through the reinforcing portion 242. Optionally, in FIG. 5, FIG. 6, and FIG. 7, the pressure relief component 24 may further include a body portion 245, the body portion 245 being connected to the reinforcing portion 242 via the first weakened portion 243, meaning that the edge of the body portion 245 is at least part of the edge of the pressure relief component 24. In an example, in FIG. 6 and FIG. 7, the first weakened portion 243 is an annular structure, correspondingly, the body portion 245 is an annular structure surrounding the first weakened portion 243, so that the edge of the body portion 245 is made to be the edge of the pressure relief component 24. Certainly, in some embodiments, the pressure relief component 24 may not be provided with a body portion 245, meaning that the first weakened portion 243 surrounds the reinforcing portion 242, so that the region of the pressure relief component 24 outside the reinforcing portion 242 is all the first weakened portion 243.

The stiffness of the first weakened portion 243 is less than the stiffness of the reinforcing portion 242, where stiffness refers to the ability of a material or structure to resist elastic deformation under force, representing the ease or difficulty of elastic deformation of the material or structure. That is to say, the deformation resistance of the first weakened portion 243 is weaker than the deformation resistance of the reinforcing portion 242, so that the first weakened portion 243 is more prone to deformation compared to the reinforcing portion 242 when subjected to impact.

The pressure relief component 24 is provided with the pressure relief portion 241, the reinforcing portion 242, and the first weakened portion 243 that are sequentially connected, and the reinforcing portion 242 is arranged around the pressure relief portion 241, so that the pressure relief portion 241 is structured to be connected to the first weakened portion 243 through the reinforcing portion 242. By setting the stiffness of the first weakened portion 243 to be less than the stiffness of the reinforcing portion 242, the deformation resistance of the first weakened portion 243 is weaker than the deformation resistance of the reinforcing portion 242, so that the first weakened portion 243 is made more prone to deformation. This allows the first weakened portion 243 to effectively absorb the deformation energy of the battery cell 20 when the battery cell 20 is subjected to internal and external impact forces and deforms. In this way, the first weakened portion 243 can provide a certain buffering effect, thereby offering a degree of protection to the pressure relief portion 241 located inside the reinforcing portion 242. Consequently, this can effectively reduce phenomena such as deformation or damage to the pressure relief portion 241 of the pressure relief component 24 when the battery cell 20 is subjected to internal and external impact forces. This can effectively mitigate premature actuation of the pressure relief portion 241 of the pressure relief component 24 during use, thereby improving the operational stability and service life of the pressure relief component 24, and thus helping to improve the service life and reliability of the battery cell 20 equipped with such a pressure relief component 24.

According to some embodiments of this application, as shown in FIG. 5 and FIG. 6, a thickness of the first weakened portion 243 is less than a thickness of the reinforcing portion 242.

The first weakened portion 243 and the reinforcing portion 242 are an integrally formed structure, meaning that the material of the first weakened portion 243 is the same as the material of the reinforcing portion 242. Thus, by setting the thickness of the first weakened portion 243 to be less than the thickness of the reinforcing portion 242, the stiffness of the first weakened portion 243 is made less than the stiffness of the reinforcing portion 242. Certainly, in other embodiments, the pressure relief component 24 may alternatively have other structures. For example, the first weakened portion 243 and the reinforcing portion 242 are set to as structures made of different materials, with the strength of the material of the first weakened portion 243 being less than the strength of the material of the reinforcing portion 242, so as to achieve that the stiffness of the first weakened portion 243 is less than the stiffness of the reinforcing portion 242.

In FIG. 6, the thickness of the first weakened portion 243 is D₁, the thickness of the reinforcing portion 242 is D₃, and the thickness of the first weakened portion 243 is less than the thickness of the reinforcing portion 242, that is, D₁ < D₃.

In an example, the pressure relief component 24 is provided with a first concave groove 244 to thin the region of the pressure relief component 24 in which the first concave groove 244 is formed, thereby forming the first weakened portion 243 in the region of the pressure relief component 24 in which the first concave groove 244 is formed. It should be noted that the first concave groove 244 can be formed by cutting or stamping processes. In an example, in FIG. 6, the first concave groove 244 is formed by a stamping process, so that a protrusion 246 is formed on a side of the pressure relief component 24 facing away from the first concave groove 244. The protrusion 246 may be directly opposite the first concave groove 244, meaning that the protrusion 246 covers the entire groove bottom surface of the first concave groove 244 in a thickness direction of the first weakened portion 243. In this embodiment, the first weakened portion 243 is a structure protruding from the side of the pressure relief component 24 facing away from the first concave groove 244, and the thickness D₁ of the first weakened portion 243 is the thickness of the entire groove bottom wall of the first concave groove 244. Certainly, as shown in FIG. 6, the protrusion 246 may be offset from the first concave groove 244, meaning that the protrusion 246 covers a portion of the groove bottom surface of the first concave groove 244 in the thickness direction of the first weakened portion 243. In this embodiment, the first weakened portion 243 forms a stepped structure with varying thickness, so that the first weakened portion 243 forms two interconnected parts, one part forming the protrusion, making this part protrude from the side of the pressure relief component 24 facing away from the first concave groove 244, and the other part not forming the protrusion, making this part not protrude from the side of the pressure relief component 24 facing away from the first concave groove 244. The thickness D₁ of the first weakened portion 243 is a thickness of the part of the first weakened portion 243 not protruding from the side of the pressure relief component 24 facing away from the first concave groove 244.

By setting the thickness of the first weakened portion 243 to be less than the thickness of the reinforcing portion 242, the first weakened portion 243 is made more prone to deformation compared to the reinforcing portion 242, so as to achieve that the stiffness of the first weakened portion 243 is less than the stiffness of the reinforcing portion 242. This approach features a simple structure and is easy to implement.

According to some embodiments of this application, as shown in FIG. 5, FIG. 6, and FIG. 7, the pressure relief component 24 may further include a body portion 245, the first weakened portion 243 connecting the body portion 245 and the reinforcing portion 242, where the stiffness of the first weakened portion 243 is less than stiffness of the body portion 245.

The stiffness of the first weakened portion 243 is less than the stiffness of the body portion 245, meaning that the deformation resistance of the first weakened portion 243 is weaker than the deformation resistance of the body portion 245, so that the first weakened portion 243 is more prone to deformation than the body portion 245 when subjected to impact.

It should be noted that when the pressure relief component 24 is one wall of the housing 21, the body portion 245 serves to connect the other walls of the housing 21, so as to enable the pressure relief component 24 and the other walls of the housing 21 to enclose a closed space for accommodating the electrode assembly 22. When the pressure relief component 24 is separately arranged from the housing 21 and the pressure relief component 24 is an independent component mounted on the housing 21, the body portion 245 serves to connect the housing 21, so as to enable the pressure relief component 24 to be mounted on the housing 21.

The pressure relief component 24 further includes the body portion 245. With the first weakened portion 243 connected between the body portion 245 and the reinforcing portion 242. By setting the stiffness of the first weakened portion 243 to be less than the stiffness of the body portion 245, the pressure relief component 24 forms a structure of which the stiffness decreases from the body portion 245 to the first weakened portion 243 and then increases to the reinforcing portion 242, so that the first weakened portion 243 can form a buffer region that is more prone to deformation between the body portion 245 and the reinforcing portion 242. This enhances the structural strength of the pressure relief component 24 itself while further improving the protective effect on the pressure relief portion 241, thereby further mitigating phenomena such as deformation or damage to the pressure relief portion 241 when the battery cell 20 is subjected to internal and external impact forces.

In some embodiments, as shown in FIG. 5 and FIG. 6, the thickness of the first weakened portion 243 is less than a thickness of the body portion 245.

The first weakened portion 243 and the body portion 245 are an integrally formed structure, meaning that the material of the first weakened portion 243 is the same as that of the body portion 245. Thus, by setting the thickness of the first weakened portion 243 to be less than the thickness of the body portion 245, the stiffness of the first weakened portion 243 is made less than the stiffness of the body portion 245. Certainly, in other embodiments, the pressure relief component 24 may have other structures. For example, the first weakened portion 243 and the body portion 245 are set as structures made of different materials, and the strength of the material of the first weakened portion 243 is less than the strength of the material of the body portion 245, so as to achieve that the stiffness of the first weakened portion 243 is less than the stiffness of the body portion 245.

In FIG. 6, the thickness of the first weakened portion 243 is D₁, the thickness of the body portion 245 is D₂, and the thickness of the first weakened portion 243 is less than the thickness of the body portion 245, that is, D₁ < D₂.

By setting the thickness of the first weakened portion 243 to be less than the thickness of the body portion 245, the first weakened portion 243 is made more prone to deformation compared to the body portion 245, so as to achieve that the stiffness of the first weakened portion 243 is less than the stiffness of the body portion 245. This approach features a simple structure and is easy to implement.

According to some embodiments of this application, as shown in FIG. 6, the thickness of the first weakened portion 243 is D₁, and the thickness of the body portion 245 is D₂, meeting 0.3D₂ ≤ D₁ ≤ 0.9D₂.

The thickness of the first weakened portion 243 is D₁, to be specific, the thickness of the first weakened portion 243 in a depth direction of the first concave groove 244 is D₁. The thickness of the body portion 245 is D₂, to be specific, the thickness of the body portion 245 in a thickness direction X of the pressure relief component is D₂.

In an example, the thickness D₁ of the first weakened portion 243 may be 0.3 times, 0.35 times, 0.4 times, 0.45 times, 0.5 times, 0.6 times, 0.7 times, 0.8 times 0.9 times, or the like of the thickness D₂ of the body portion 245.

By setting the thickness of the first weakened portion 243 to be 0.3 to 0.9 times the thickness of the body portion 245, it can mitigate the risk of the overall structural strength of the pressure relief component 24 being weak and prone to fracture due to an excessively small thickness of the first weakened portion 243, thereby enhancing the service life and reliability of the pressure relief component 24. Additionally, it can mitigate the poor effect of the first weakened portion 243 in absorbing deformation energy when the battery cell 20 is subjected to internal and external impact forces due to an excessively large thickness of the first weakened portion 243, thereby improving the buffering effect of the first weakened portion 243 and improving the protective effect on the pressure relief portion 241 of the pressure relief component 24.

In some embodiments, still referring to FIG. 6, the thickness of the first weakened portion 243 is D₁, and the thickness of the body portion 245 is D₂, meeting 0.5D₂ ≤ D₁ ≤ 0.7D₂.

In an example, the thickness D₁ of the first weakened portion 243 may be 0.5 times, 0.52 times, 0.55 times, 0.58 times, 0.6 times, 0.62 times, 0.65 times, 0.7 times, or the like of the thickness D₂ of the body portion 245.

By setting the thickness of the first weakened portion 243 to be 0.5 to 0.7 times the thickness of the body portion 245, it can further mitigate the risk of the overall structural strength of the pressure relief component 24 being weak and prone to fracture due to an excessively small thickness of the first weakened portion 243, thereby improving the service life and reliability of the pressure relief component 24, while also reducing the phenomenon of excessive material removal required for the first weakened portion 243, optimizing production rhythm and improving the production efficiency of the pressure relief component 24. Additionally, it can further mitigate the poor effect of the first weakened portion 243 in absorbing deformation energy when the battery cell 20 is subjected to internal and external impact forces due to an excessively large thickness of the first weakened portion 243, and reduce the phenomenon of excessive processing difficulty for the first weakened portion 243.

According to some embodiments of this application, as shown in FIG. 5, FIG. 6, and FIG. 7, the pressure relief component 24 is provided with a first concave groove 244, and the first weakened portion 243 is formed in a region in which the pressure relief component 24 is provided with the first concave groove 244.

The first weakened portion 243 is formed in the region in which the pressure relief component 24 is provided with the first concave groove 244, meaning that the thickness of the region of the pressure relief component 24 in which the first concave groove 244 is formed is thinned, so that the part of the pressure relief component 24 in which the first concave groove 244 is provided is the first weakened portion 243.

Optionally, the first concave groove 244 may be provided on a side of the pressure relief component 24 facing the interior of the housing 21, or on a side of the pressure relief component 24 facing away from the interior of the housing 21, or the first concave groove 244 may be formed on two sides of the pressure relief component 24, so that the first concave grooves 244 on the two sides of the pressure relief component 24 jointly thin the pressure relief component 24 to form the first weakened portion 243.

By providing the first concave groove 244 on the pressure relief component 24, the pressure relief component 24 forms the first weakened portion 243 of the pressure relief component 24 in the region in which the first concave groove 244 is provided. The pressure relief component 24 with this structure facilitates the formation of the first weakened portion 243 on the pressure relief component 24, which helps to reduce the manufacturing difficulty of forming the first weakened portion 243 on the pressure relief component 24, thereby improving the production efficiency of the pressure relief component 24.

According to some embodiments of this application, as shown in FIG. 6, the groove width of the first concave groove 244 is W, meeting 0.5 mm ≤ W ≤ 10 mm.

The groove width W of the first concave groove 244 is a width of the groove bottom surface of the first concave groove 244, that is, the width of the first weakened portion 243.

In an example, the groove width W of the first concave groove 244 may be 0.5 mm, 0.6 mm, 0.8 mm, 1 mm, 1.5 mm, 2 mm, 3 mm, 4 mm, 5 mm, 6 mm, 7 mm, 8 mm, 10 mm, or the like.

By setting the width of the first concave groove 244 to be 0.5 mm to 10 mm, it can mitigate the phenomenon that the width of the first weakened portion 243 is too small due to the too small groove width of the first concave groove 244, resulting in a poor effect of the first weakened portion 243 absorbing deformation energy when the battery cell 20 is subjected to internal and external impact forces and deforms, thereby improving the buffering effect of the first weakened portion 243 and improving the protective effect on the pressure relief portion 241 of the pressure relief component 24. Additionally, it can mitigate the phenomenon of the first weakened portion 243 occupying excessive space on the pressure relief component 24 due to an excessively large groove width of the first concave groove 244, resulting in a weak overall structural strength of the pressure relief component 24, thereby reducing the risk of fracture and other issues during use of the pressure relief component 24.

In some embodiments, as shown in FIG. 6, the groove width of the first concave groove 244 is W, meeting 2 mm ≤ W ≤ 5 mm.

In an example, the groove width W of the first concave groove 244 may be 2 mm, 2.2 mm, 2.5 mm, 2.8 mm, 3 mm, 3.5 mm, 4 mm, 4.5 mm, 5 mm, or the like.

By setting the width of the first concave groove 244 to be 2 mm to 5 mm, it can further mitigate the phenomenon that the width of the first weakened portion 243 is too small due to the too small groove width of the first concave groove 244, resulting in a poor effect of the first weakened portion 243 absorbing deformation energy when the battery cell 20 is subjected to internal and external impact forces and deforms, and can also mitigate the phenomenon that the excessive processing difficulty of the first concave groove 244 due to the too small groove width of the first concave groove 244. Additionally, it can further mitigate the phenomenon of the first weakened portion 243 occupying excessive space on the pressure relief component 24 due to an excessively large groove width of the first concave groove 244, resulting in a weak overall structural strength of the pressure relief component 24, while also reducing the processing scope of the first concave groove 244, optimizing production rhythm and improving the production efficiency of the pressure relief component 24.

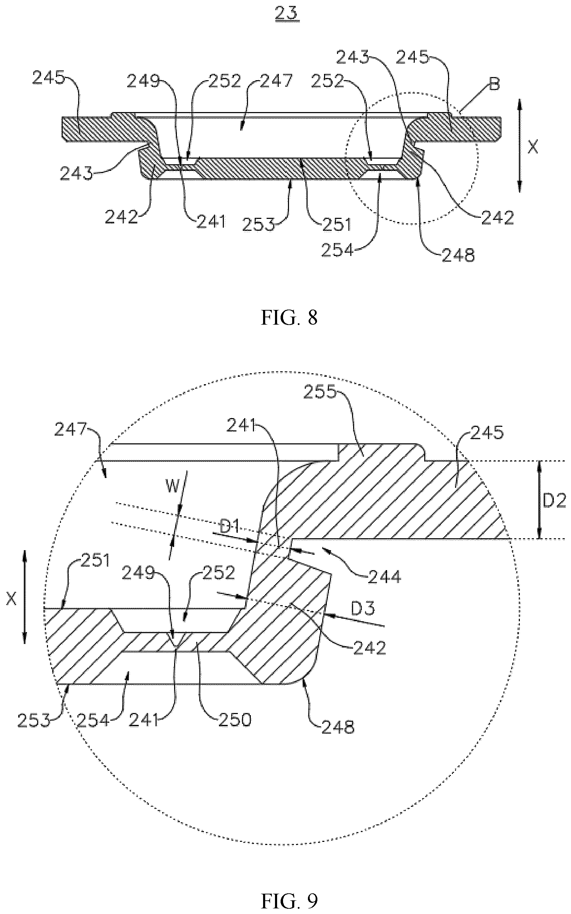

According to some embodiments of this application, referring to FIG. 5 and FIG. 6, and further referring to FIG. 8 and FIG. 9, FIG. 8 is a cross-sectional view of the pressure relief component 24 of the battery cell 20 according to some other embodiments of this application, and FIG. 9 is a partial enlarged view of circle B of the pressure relief component 24 of the battery cell 20 shown in FIG. 8. The first concave groove 244 is provided on the side of the pressure relief component 24 facing the interior of the battery cell 20.

The first concave groove 244 is provided on the side of the pressure relief component 24 facing the interior of the battery cell 20, to be specific, the first concave groove 244 is provided on the side of the pressure relief component 24 facing the internal space of the housing 21.

By providing the first concave groove 244 on the pressure relief component 24 on the side facing the interior of the battery cell 20, it can reduce the phenomenon of dirt accumulation in the first concave groove 244 on the pressure relief component 24 during use.

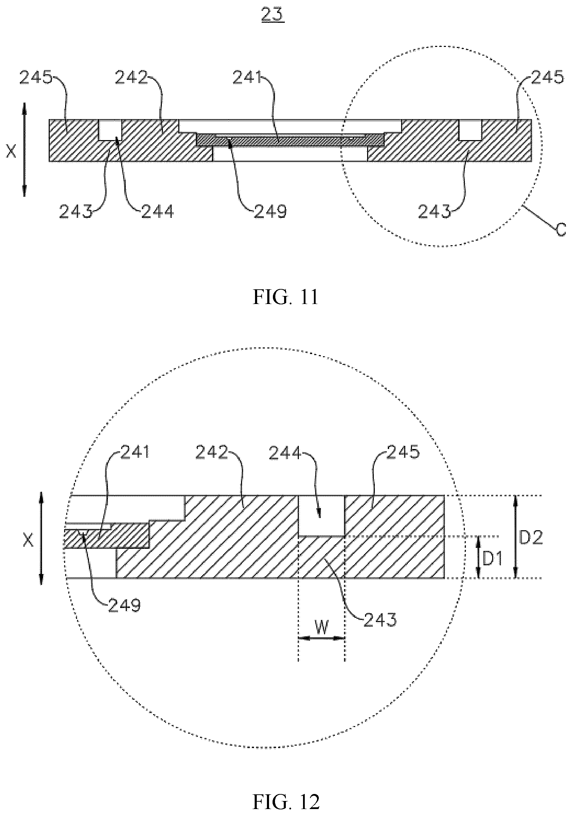

According to some embodiments of this application, referring to FIG. 10, FIG. 11, and FIG. 12, FIG. 10 is a schematic structural diagram of the battery cell 20 according to some other embodiments of this application, FIG. 11 is a cross-sectional view of the pressure relief component 24 of the battery cell 20 according to some other embodiments of this application, and FIG. 12 is a partial enlarged view of circle C of the pressure relief component 24 of the battery cell 20 shown in FIG. 11. The first concave groove 244 is provided on the side of the pressure relief component 24 facing away from the interior of the battery cell 20.

The first concave groove 244 is provided on the side of the pressure relief component 24 facing away from the interior of the battery cell 20, to be specific, the first concave groove 244 is provided on the side of the pressure relief component 24 facing away from the internal space of the housing 21. That is to say, the first concave groove 244 is provided on the side of the pressure relief component 24 facing the external environment.

By providing the first concave groove 244 on the pressure relief component 24 on the side facing away from the interior of the battery cell 20, it facilitates the processing and formation of the first concave groove 244 on the pressure relief component 24 from the outside, which helps to reduce the difficulty of providing the first concave groove 244 on the pressure relief component 24, thereby improving processing efficiency.

Certainly, the structure of the pressure relief component 24 is not limited thereto, and in some embodiments, the first concave groove 244 is provided on two sides of the pressure relief component 24.

The two first concave grooves 244 provided on the two sides of the pressure relief component 24 are oppositely disposed in the thickness direction X of the pressure relief component, so that the two first concave grooves 244 can thin the pressure relief component 24 from the two sides to form the first weakened portion 243.

By providing the first concave groove 244 on each of the two sides of the pressure relief component 24, the pressure relief component 24 is thinned from the two sides to form the first weakened portion 243. This structure can reduce the processing depth of providing the first concave groove 244 on one side of the pressure relief component 24, which helps to reduce the difficulty of forming the first weakened portion 243 on the pressure relief component 24. Additionally, this structure facilitates material flow during the formation of the first concave groove 244, which helps to improve the processing quality of the first concave groove 244.

According to some embodiments of this application, as shown in FIG. 5 and FIG. 6, a protrusion 246 is formed on a side of the pressure relief component 24 facing away from the first concave groove 244 and corresponding to a position of the first concave groove 244.

The protrusion 246 is formed on the side of the pressure relief component 24 facing away from the first concave groove 244 and corresponding to the position of the first concave groove 244, meaning that at least a portion of the first weakened portion 243 formed in a region in which the pressure relief component 24 is provided with the first concave groove 244 protrudes from the side of the pressure relief component 24 facing away from the first concave groove 244.

By forming the protrusion 246 on the side of the pressure relief component 24 facing away from the first concave groove 244 and corresponding to the position of the first concave groove 244, the first concave groove 244 can be formed through a stamping process, so that the first weakened portion 243 can be formed in the region of the pressure relief component 24 corresponding to the first concave groove 244, which facilitates the formation of the first weakened portion 243 and helps to improve processing efficiency.

In some embodiments, along a thickness direction of the first weakened portion 243, a projection of the protrusion 246 covers a portion of the groove bottom surface of the first concave groove 244.

In FIG. 6, the reinforcing portion 242, the first weakened portion 243, and the body portion 245 are arranged along the radial direction of the reinforcing portion 242, in other words, the thickness direction of the first weakened portion 243 is the thickness direction X of the pressure relief component.

The projection of the protrusion 246 covers a portion of the groove bottom surface of the first concave groove 244, meaning that the protrusion 246 and the first concave groove 244 are offset from each other, so that the first weakened portion 243 forms a stepped structure with varying thickness. In an example, in FIG. 6, a portion of the protrusion 246 corresponds to the first concave groove 244 in the thickness direction of the pressure relief component, and another portion is connected to the reinforcing portion 242. The portion of the protrusion 246 corresponding to the first concave groove 244 forms a portion of the first weakened portion 243, so that the first weakened portion 243 forms a stepped structure with varying thickness, with a portion of the first weakened portion 243 forming the protrusion 246, and another portion not forming the protrusion 246.

It should be noted that, in FIG. 6, the first concave groove 244 is provided on the side of the pressure relief component 24 facing the interior of the housing 21, and the reinforcing portion 242, the first weakened portion 243, and the body portion 245 are arranged along the radial direction of the reinforcing portion 242. The protrusion 246 formed on the side of the pressure relief component 24 facing away from the first concave groove 244 may also be used to mount a patch, thereby providing a protective effect on the pressure relief portion 241.

By making the projection of the protrusion 246 along the thickness direction of the first weakened portion 243 cover only a portion of the groove bottom surface of the first concave groove 244, the protrusion 246 and the first concave groove 244 form a mutually offset structure, so that the first weakened portion 243 formed in a region in which the pressure relief component 24 is provided with the first concave groove 244 forms a stepped structure with varying thickness, which is beneficial to the deformation of the first weakened portion 243 and the absorption of internal and external impact forces on the battery cell 20.

In some embodiments, as shown in FIG. 6, the groove width of the first concave groove 244 is W, and along a groove width direction of the first concave groove 244, a dimension of the portion of the first weakened portion 243 not forming the protrusion 246 is L, meeting 0.1W ≤ L ≤ 0.5W.

The dimension of the portion of the first weakened portion 243 not forming the protrusion 246 is L, to be specific, the dimension of a thinner portion in the stepped structure of the first weakened portion 243 in the groove width direction of the first concave groove 244 is L.

0.1W ≤ L ≤ 0.5W means that the protrusion 246 is not formed on the portion of the first weakened portion 243, and the portion with a smaller thickness in the stepped structure of the first weakened portion 243 accounts for 10% to 50% of the groove width of the first concave groove 244, to be specific, the region of the groove bottom surface of the first concave groove 244 covered by the projection of the protrusion 246 along the thickness direction of the first weakened portion 243 accounts for 50% to 90% of the groove bottom surface of the first concave groove 244 in the groove width of the first concave groove 244.

By setting the dimension of the portion of the first weakened portion 243 not forming the protrusion 246 along the groove width direction of the first concave groove 244 to be 0.1 to 0.5 times the groove width of the first concave groove 244, it can mitigate the poor effect of the first weakened portion 243 in absorbing internal and external impact forces on the battery cell 20 due to an excessively small proportion leading to too much area of the first weakened portion 243 forming the protrusion 246. Additionally, it can mitigate the phenomenon of excessive deviation between the protrusion 246 and the first concave groove 244 due to an overly large proportion, which would increase the stamping difficulty of the first concave groove 244.

According to some embodiments of this application, as shown in FIG. 5, FIG. 6, and FIG. 7, the first weakened portion 243 is an annular structure extending along a circumferential direction of the reinforcing portion 242.

The first weakened portion 243 is an annular structure extending along the circumferential direction of the reinforcing portion 242, meaning that the first weakened portion 243 is an annular structure with ends connected, extending along the circumferential direction of the reinforcing portion 242, so that the first weakened portion 243 forms a structure surrounding the reinforcing portion 242.

Optionally, in FIG. 7, the pressure relief portion 241 is an elliptical annular structure, so that the reinforcing portion 242 forms an elliptical structure surrounding the pressure relief portion 241, where a dimension of the reinforcing portion 242 in the first direction Y is less than a dimension of the reinforcing portion 242 in the second direction Z, so that the reinforcing portion 242 has two oppositely disposed strip segments 2421 in the first direction Y and two oppositely disposed arc segments 2422 in the second direction Z, with the two arc segments 2422 respectively connected to the two ends of the strip segments 2421 in the first direction Y, the first direction Y, the second direction Z, and the thickness direction X of the pressure relief component being pairwise perpendicular.

In an example, in FIG. 5 and FIG. 7, the first weakened portion 243 may be provided in one. Certainly, in some embodiments, the first weakened portion 243 may alternatively be provided in plurality, with the plurality of first weakened portions 243 being sequentially surrounding structures. To be specific, one first weakened portion 243 is arranged surrounding the outside of another first weakened portion 243, and every two adjacent first weakened portions 243 are connected through a connecting portion.

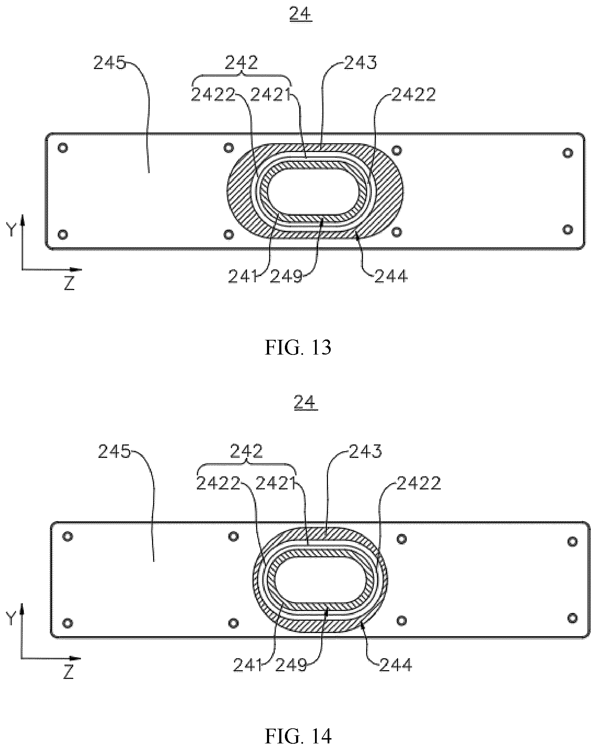

Optionally, in FIG. 7, the first weakened portion 243 is a structure with uniform width and thickness in its extension direction. Certainly, in other embodiments, the first weakened portion 243 may alternatively be set as a structure with non-uniform thickness in its extension direction. For example, the thickness of the region of the first weakened portion 243 connected to the strip segment 2421 of the reinforcing portion 242 may be less than the thickness of the region of the first weakened portion 243 connected to the arc segment 2422 of the reinforcing portion 242, or the thickness of the region of the first weakened portion 243 connected to the strip segment 2421 of the reinforcing portion 242 may be greater than the thickness of the region of the first weakened portion 243 connected to the arc segment 2422 of the reinforcing portion 242. Similarly, the first weakened portion 243 may alternatively be set as a structure with non-uniform width in its extension direction. For example, referring to FIG. 13, FIG. 13 is a bottom view of the pressure relief component 24 of the battery cell 20 in other embodiments according to some embodiments of this application. The width of the region of the first weakened portion 243 connected to the arc segment 2422 in the second direction Z is greater than the width of the region of the first weakened portion 243 connected to the strip segment 2421 in the first direction Y, meaning that, in the structure formed by the region of the pressure relief portion 241 in which the first concave groove 244 is provided on the pressure relief component 24, the groove width of the portion of the first concave groove 244 connected to the arc segment 2422 is greater than the groove width of the portion of the first concave groove 244 connected to the strip segment 2421. Certainly, the pressure relief component 24 may alternatively have other structures. For example, referring to FIG. 14, FIG. 14 is a bottom view of the pressure relief component 24 of the battery cell 20 in further embodiments according to some embodiments of this application. The width of the region of the first weakened portion 243 connected to the strip segment 2421 in the first direction Y is greater than the width of the region of the first weakened portion 243 connected to the arc segment 2422 in the second direction Z, meaning that, in the structure formed by the region of the pressure relief portion 241 in which the first concave groove 244 is provided on the pressure relief component 24, the groove width of the portion of the first concave groove 244 connected to the strip segment 2421 is greater than the groove width of the portion of the first weakened portion 243 connected to the arc segment 2422.

By setting the first weakened portion 243 as an annular structure extending along the circumferential direction of the reinforcing portion 242, the first weakened portion 243 is structured to surround the reinforcing portion 242, so that the first weakened portion 243 can absorb impact forces transmitted from all directions to the pressure relief component 24, which helps to improve the protective effect of the first weakened portion 243 on the pressure relief portion 241 of the pressure relief component 24.

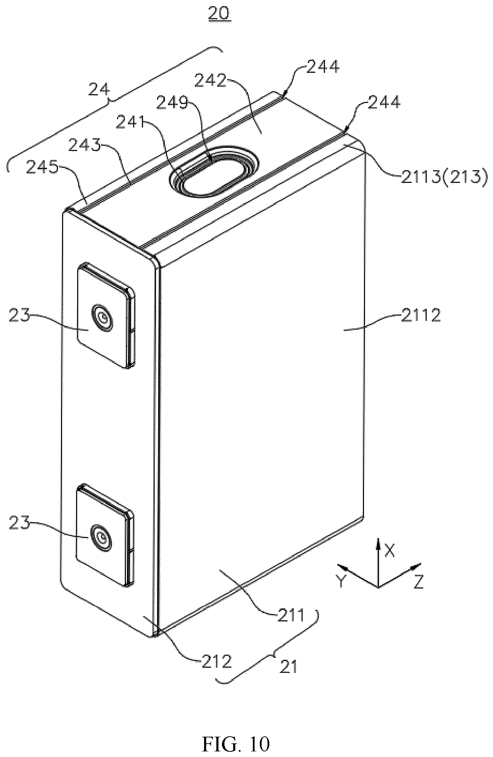

According to some embodiments of this application, as shown in FIG. 10, FIG. 11, and FIG. 12, a dimension of the pressure relief component 24 in the first direction Y is less than a dimension of the pressure relief component 24 in the second direction Z, the first direction Y, the second direction Z, and the thickness direction X of the pressure relief component being pairwise perpendicular. Along the first direction Y, at least one side of the reinforcing portion 242 is provided with the first weakened portion 243.

In an example, in FIG. 10, the pressure relief component 24 is one wall on the shell 211 of the housing 21, the pressure relief component 24 connecting the wall of the shell 211 with a largest surface area and the wall of the shell 211 opposite to the end cover 212, so that the pressure relief component 24 is a sidewall of the shell 211 in the length direction of the battery cell 20, the first direction Y is the thickness direction of the battery cell 20, and the second direction Z is the height direction of the battery cell 20. Since the wall with the largest surface area in the shell 211 has a larger deformation during use and is more prone to deformation, adopting this structure enables the first weakened portion 243 to effectively absorb the deformation energy of the shell 211 to reduce the impact of the deformation of the shell 211 on the pressure relief portion 241. Certainly, in other embodiments, the pressure relief component 24 may alternatively be the bottom wall of the shell 211 opposite the end cover 212 or the wall with the largest surface area in the shell 211.

Optionally, the first weakened portion 243 is a strip structure extending along the second direction Z. Certainly, in other embodiments, the first weakened portion 243 may alternatively be an arc structure provided on one side of the reinforcing portion 242 in the first direction Y, or the like.

The dimension of the pressure relief component 24 in the first direction Y is less than its dimension in the second direction Z, resulting in a structure of which the pressure relief portion 241 of the pressure relief component 24 is farther from an edge of the pressure relief component 24 in the second direction Z, experiencing less impact force, while the pressure relief portion 241 of the pressure relief component 24 is more affected by impact forces in the first direction Y. Therefore, by providing the first weakened portion 243 on at least one side of the reinforcing portion 242 in the first direction Y to reduce the impact force on the pressure relief portion 241 of the pressure relief component 24 in the first direction Y, there is no need to surround the entire outer side of the reinforcing portion 242 with the first weakened portion 243, which helps to reduce processing costs and enhance the overall structural strength of the pressure relief component 24.

In some embodiments, along the first direction Y, the first weakened portion 243 is provided on each of two sides of the reinforcing portion 242. To be specific, the pressure relief component 24 has two first weakened portions 243 formed, the two first weakened portions 243 being respectively located on the two sides of the reinforcing portion 242 in the first direction Y.

In an example, in FIG. 10, only one first weakened portion 243 is provided on one side of the reinforcing portion 242 in the first direction Y. Certainly, in some embodiments, a plurality of first weakened portions 243 may alternatively be provided on one side of the reinforcing portion 242 in the first direction Y, where the plurality of first weakened portions 243 are spaced apart from each other along the first direction Y, and among the plurality of first weakened portions 243 located on the same side of the reinforcing portion 242 in the first direction Y, every two adjacent first weakened portions 243 are connected through a connecting portion.

By providing the first weakened portion 243 on two sides of the reinforcing portion 242 along the first direction Y, the pressure relief portion 241 of the pressure relief component 24 is provided with the first weakened portion 243 on the two sides in the direction of which it is more affected by impact forces, which helps to further reduce the impact on the pressure relief portion 241 of the pressure relief component 24 when the battery cell 20 is subjected to internal and external impact forces.

According to some embodiments of this application, as shown in FIG. 10, a length of the first weakened portion 243 in the second direction Z is greater than a dimension of the pressure relief portion 241 in the second direction Z, to be specific, the extension length of the first weakened portion 243 in the second direction Z is greater than the spatial dimension occupied by the pressure relief portion 241 in the second direction Z.

By setting the length of the first weakened portion 243 in the second direction Z to be greater than the dimension of the pressure relief portion 241 in the second direction Z, it can effectively block the impact force received by the pressure relief portion 241 in the first direction Y, thereby improving the protective effect of the first weakened portion 243 on the pressure relief portion 241.

In some embodiments, along the second direction Z, two ends of the first weakened portion 243 extend to two ends of the pressure relief component 24, respectively.

In an example, the first weakened portion 243 is a structure formed by the region of the pressure relief component 24 in which the first concave groove 244 is provided, with two ends of the first weakened portion 243 extending to the two ends of the pressure relief component 24 along the second direction Z, respectively. To be specific, the first concave groove 244 extends along the second direction Z, and the two ends of the first concave groove 244 in the second direction Z respectively penetrate the two ends of the pressure relief component 24, thereby facilitating the processing of the first concave groove 244, which helps to reduce the difficulty of material flow during the processing of the first concave groove 244 on the pressure relief component 24.

By setting the two ends of the first weakened portion 243 in the second direction Z to extend to the two ends of the pressure relief component 24, respectively, it can further block the impact force transmitted to the pressure relief portion 241 from the first direction Y, thereby further improving the protective effect of the first weakened portion 243 on the pressure relief portion 241. Additionally, it facilitates the manufacturing of the first weakened portion 243, which helps to reduce the processing difficulty and cost of forming the first weakened portion 243 on the pressure relief component 24.

According to some embodiments of this application, as shown in FIG. 5 and FIG. 6, along the thickness direction X of the pressure relief component, a second concave groove 247 is formed on the side of the pressure relief component 24 facing away from the interior of the battery cell 20, and a convex portion 248 is formed on the other side at a position corresponding to the second concave groove 247, where the groove bottom wall of the second concave groove 247 includes the pressure relief portion 241.

The second concave groove 247 is formed on the side of the pressure relief component 24 facing away from the interior of the battery cell 20, and the convex portion 248 is formed on the other side at a position corresponding to the second concave groove 247, so that the second concave groove 247 is a structure formed through a stamping process, facilitating processing, which helps to improve the processing efficiency of providing the second concave groove 247 on the pressure relief component 24.

The groove bottom wall of the second concave groove 247 includes the pressure relief portion 241, meaning that the pressure relief portion 241 forms at least part of the groove bottom wall of the second concave groove 247. It should be noted that if the pressure relief portion 241 and the reinforcing portion 242 are an integral structure, to be specific, the pressure relief component 24 is made through an integral molding process, the pressure relief portion 241 is provided on the groove bottom wall of the second concave groove 247; if the pressure relief portion 241 and the reinforcing portion 242 are separate structures, to be specific, the pressure relief component 24 is a structure of which the pressure relief portion 241 and the reinforcing portion 242 are separately provided, with the pressure relief portion 241 mounted on the reinforcing portion 242 through processes such as welding, the pressure relief portion 241 is the groove bottom wall of the second concave groove 247. In an example, in FIG. 6, the pressure relief portion 241 and the reinforcing portion 242 are an integral structure, to be specific, the pressure relief portion 241 is provided on the groove bottom wall of the second concave groove 247, a score groove 249 is provided on the groove bottom wall of the second concave groove 247, and the pressure relief component 24 forms the pressure relief portion 241 in a region in which the score groove 249 is provided.

By providing the second concave groove 247 on the side of the pressure relief component 24 facing away from the interior of the battery cell 20, with the groove bottom wall of the second concave groove 247 including the pressure relief portion 241, in other words, the pressure relief portion 241 being formed on the groove bottom wall of the second concave groove 247, the second concave groove 247 can provide a certain protective effect on the pressure relief portion 241, which reduces wear or damage to the pressure relief portion 241 under external environmental effects, thereby facilitating an improvement in the service life of the pressure relief component 24.

According to some embodiments of this application, as further shown in FIG. 5 and FIG. 6, the reinforcing portion 242 encloses a groove sidewall of the second concave groove 247, and along a radial direction of the reinforcing portion 242, the first weakened portion 243 is connected to an outer side of the reinforcing portion 242.

The reinforcing portion 242 encloses the groove sidewall of the second concave groove 247, meaning that the groove sidewall of the second concave groove 247 is formed by the reinforcing portion 242, in other words, the groove sidewall of the second concave groove 247 is at least part of the reinforcing portion 242.

Along the radial direction of the reinforcing portion 242, the first weakened portion 243 is connected to the outer side of the reinforcing portion 242, meaning that the pressure relief portion 241 is provided on the inner side of the reinforcing portion 242, while the first weakened portion 243 is provided on the outer side of the reinforcing portion 242, so that the reinforcing portion 242, the first weakened portion 243, and the body portion 245 are sequentially arranged along the radial direction of the reinforcing portion 242.

It should be noted that in embodiments in which the first weakened portion 243 is connected to the outer side of the reinforcing portion 242 along the radial direction of the reinforcing portion 242, the first weakened portion 243 may be an annular structure, in other words, the first weakened portion 243 surrounds the outer side of the reinforcing portion 242. Certainly, the first weakened portion 243 may alternatively be a strip structure, in other words, the first weakened portion 243 is provided on one side of the reinforcing portion 242 along the radial direction of the reinforcing portion 242.

By setting the reinforcing portion 242 to enclose the groove sidewall of the second concave groove 247, the first weakened portion 243 and the reinforcing portion 242 are arranged along the radial direction of the reinforcing portion 242, facilitating manufacturing and processing.

According to some embodiments of this application, as shown in FIG. 8 and FIG. 9, the pressure relief component 24 may further include a body portion 245, the first weakened portion 243 connecting the body portion 245 and the reinforcing portion 242, and the stiffness of the first weakened portion 243 being less than stiffness of the body portion 245, where the groove sidewall of the second concave groove 247 includes the first weakened portion 243, and along the thickness direction X of the pressure relief component, the first weakened portion 243 is connected between the body portion 245 and the reinforcing portion 242.

The groove sidewall of the second concave groove 247 includes the first weakened portion 243, meaning that the first weakened portion 243 is formed on the groove sidewall of the second concave groove 247, so that the first weakened portion 243 is at least part of the groove sidewall of the second concave groove 247. In embodiments in which the first weakened portion 243 is a structure formed by the region of the pressure relief component 24 in which the first concave groove 244 is provided, the first concave groove 244 is provided on one side of the groove sidewall of the second concave groove 247, and the first concave groove 244 may be provided on the side of the groove sidewall of the second concave groove 247 facing the second concave groove 247 or may be provided on the side of the groove sidewall of the second concave groove 247 facing away from the second concave groove 247. In an example, the first concave groove 244 is provided on the side of the groove sidewall of the second concave groove 247 facing away from the second concave groove 247.

Along the thickness direction X of the pressure relief component, the first weakened portion 243 is connected between the body portion 245 and the reinforcing portion 242, meaning that the pressure relief portion 241 and the body portion 245 are spaced apart along the thickness direction X of the pressure relief component, so that the reinforcing portion 242, the first weakened portion 243, and the body portion 245 are sequentially arranged along the thickness direction X of the pressure relief component.

It should be noted that in FIG. 9, the first weakened portion 243 is formed on the groove sidewall of the second concave groove 247. In this embodiment, a protruding portion 255 may be provided on the side of the body portion 245 facing away from the interior of the battery cell 20, and the protruding portion 255 is an annular structure surrounding the pressure relief portion 241 and encloses an installation space for mounting a protective patch, thereby providing a protective effect on the pressure relief portion 241.

The groove sidewall of the second concave groove 247 includes the first weakened portion 243, so that the first weakened portion 243 is formed on the groove sidewall of the second concave groove 247. As a result, the reinforcing portion 242, the first weakened portion 243, and the body portion 245 are structured to be arranged along the thickness direction X of the pressure relief component. This allows the first weakened portion 243 to better absorb the impact force transmitted from the body portion 245 to the reinforcing portion 242, and helps to further improve the protective effect of the first weakened portion 243 on the pressure relief portion 241 of the pressure relief component 24.

According to some embodiments of this application, as shown in FIG. 5 and FIG. 6, the pressure relief portion 241 is integrally formed with the reinforcing portion 242, the pressure relief component 24 is provided with a score groove 249, the pressure relief component 24 forms the pressure relief portion 241 in a region in which the score groove 249 is provided, and the pressure relief component 24 is capable of rupturing along the score groove 249 when the battery cell 20 relieves pressure.

The pressure relief portion 241 is integrally formed with the reinforcing portion 242, to be specific, the pressure relief component 24 is a structure formed through an integral molding process so that an integral structure of the pressure relief portion 241 and the reinforcing portion 242 is formed on the pressure relief component 24.

The pressure relief component 24 forms the pressure relief portion 241 in a region in which the score groove 249 is provided, to be specific, the pressure relief component 24 forms a weakened structure at the position in which the score groove 249 is provided, this weakened structure being the pressure relief portion 241 configured for pressure relief when the pressure relief component 24 releases the internal pressure of the battery cell 20. When the battery cell 20 releases internal pressure through the pressure relief component 24, the pressure relief component 24 can rupture along the score groove 249, destroying the pressure relief portion 241, thereby releasing the internal pressure of the battery cell 20. Certainly, the structure of the pressure relief portion 241 is not limited thereto. In other embodiments, the pressure relief portion 241 may alternatively have other structures, for example, forming a weakened region on the pressure relief component 24 through stamping, the weakened region being capable of being destroyed when the battery cell 20 relieves pressure to release the internal pressure of the battery cell 20, and the weakened region being the pressure relief portion 241.

By providing the score groove 249 on the pressure relief component 24, the region of the pressure relief component 24 in which the score groove 249 is provided forms the pressure relief portion 241 for pressure relief, allowing the pressure relief portion 241 and the reinforcing portion 242 to form an integrally molded structure. This structure of the pressure relief component 24 helps to enhance the connection stability between the pressure relief portion 241 and the reinforcing portion 242, and reduce the risk of the pressure relief portion 241 detaching during use, thereby effectively improving the operational stability and reliability of the pressure relief component 24.

According to some embodiments of this application, as shown in FIG. 6, the pressure relief component 24 may further include a second weakened portion 250, the reinforcing portion 242 being connected to the pressure relief portion 241 via the second weakened portion 250, and a thickness of the second weakened portion 250 being less than the thickness of the reinforcing portion 242 and greater than the thickness of the pressure relief portion 241.

The reinforcing portion 242 is connected to the pressure relief portion 241 via the second weakened portion 250, meaning that the pressure relief component 24 also forms a second weakened portion 250 between the region in which the score groove 249 is provided and the pressure relief portion 241 is formed and the reinforcing portion 242, the second weakened portion 250 having a thickness less than that of the reinforcing portion 242 but greater than that of the pressure relief portion 241. Certainly, in some embodiments, the pressure relief component 24 may not be provided with the second weakened portion 250, in other words, the region of the pressure relief component 24 in which the score groove 249 is provided and the pressure relief portion 241 is formed is directly connected to the reinforcing portion 242.

By providing the second weakened portion 250 between the pressure relief portion 241 and the reinforcing portion 242, with the thickness of the second weakened portion 250 being less than the thickness of the reinforcing portion 242 and greater than the thickness of the pressure relief portion 241, the structure from the reinforcing portion 242 to the pressure relief portion 241 has a gradually decreasing thickness. This facilitates the provision of a score groove 249 on the pressure relief component 24 to form the pressure relief portion 241, which helps to reduce the processing difficulty of the score groove 249 on the pressure relief component 24. Additionally, this allows the second weakened portion 250 to further provide a certain buffering effect between the pressure relief portion 241 and the reinforcing portion 242, which mitigates the phenomenon of stress from the reinforcing portion 242 directly acting on the pressure relief portion 241, thereby facilitating a reduction in the risk of cracking or damage to the pressure relief portion 241 during use, and enhancing the operational stability and reliability of the pressure relief portion 241.

According to some embodiments of this application, as shown in FIG. 5 and FIG. 6, along the thickness direction X of the pressure relief component, the pressure relief component 24 has a first surface 251, a first groove 252 being provided on the first surface 251, where the groove bottom surface of the first groove 252 is provided with the score groove 249, an extension direction of the first groove 252 is the same as an extension direction of the score groove 249, and the groove bottom wall of the first groove 252 includes the second weakened portion 250.

The first surface 251 may be a surface of the pressure relief component 24 facing the interior of the housing 21, or may be the surface of the pressure relief component 24 facing away from the interior of the housing 21. In an example, in FIG. 5, the first surface 251 is provided facing away from the interior of the housing 21, to be specific, the first surface 251 is a surface of the pressure relief component 24 facing away from the electrode assembly 22 of the battery cell 20.

The first groove 252 is provided on the first surface 251, and the groove bottom surface of the first groove 252 is provided with the score groove 249, meaning that the first groove 252 is first formed on the first surface 251, and then the score groove 249 is formed on the groove bottom surface of the first groove 252, so that the first groove 252 and the score groove 249 are arranged along the thickness direction X of the pressure relief component.

The extension direction of the first groove 252 is the same as the extension direction of the score groove 249, meaning that the shape of the first groove 252 is the same as the shape of the score groove 249, so that a multi-level stepped groove structure is formed on the first surface 251, the multi-level stepped groove including the first groove 252 and the score groove 249 sequentially provided along the thickness direction X of the pressure relief component.

The groove bottom wall of the first groove 252 includes the second weakened portion 250, to be specific, the second weakened portion 250 is a structure in a region in which the first groove 252 is provided on the pressure relief component 24 and connected between the pressure relief portion 241 and the reinforcing portion 242, meaning that the region of the groove bottom wall of the first groove 252 not provided with the score groove 249 and located between the score groove 249 and the reinforcing portion 242 is the second weakened portion 250.

The first groove 252 is provided on first surface 251 of the pressure relief component 24, and the score groove 249 is provided on the groove bottom surface of the first groove 252. The extension direction of the score groove 249 is set to be consistent with the extension direction of the first groove 252, in other words, the region of the pressure relief component 24 for providing the score groove 249 is first provided with the first groove 252 having the same extension direction as the score groove 249, so that the score groove 249 can be provided on the groove bottom surface of the first groove 252, the local region of the pressure relief component 24 can be thinned before the score groove 249 is provided. Additionally, the second weakened portion 250 with reduced thickness can be formed by providing the first groove 252, which is easy to implement. The pressure relief component 24 with this structure can reduce the depth of providing the score groove 249 on the pressure relief component 24, which helps to reduce the manufacturing difficulty and equipment requirements for processing the score groove 249 on the pressure relief component 24, thereby lowering manufacturing costs. Additionally, the pressure relief component 24 with this structure can reduce the forming force experienced by the pressure relief component 24 during the processing of the score groove 249, which helps to reduce the risk of cracks in the pressure relief component 24, thereby improving the production quality of the pressure relief component 24.

In some embodiments, as shown in FIG. 4, FIG. 5, and FIG. 6, the first groove 252 and the score groove 249 are both annular grooves. To be specific, the first groove 252 and the score groove 249 are annular structures with ends connected, so that an annular structure of the pressure relief portion 241 is formed on the pressure relief component 24. In the actual processing and production process, an annular structure of the first groove 252 is first formed on the pressure relief component 24, and then the score groove 249 is formed on the groove bottom surface of the first groove 252, so that the pressure relief portion 241 is formed at the position in which the score groove 249 is provided on the pressure relief component 24.

It should be noted that the structure of the first groove 252 and the score groove 249 is not limited thereto. In other embodiments, the first groove 252 and the score groove 249 may alternatively have other structures, for example, the first groove 252 and the score groove 249 may both be strip structures, arc structures, triangular structures, rectangular structures, pentagonal structures, or the like. Certainly, in some embodiments, the first groove 252 and the score groove 249 may alternatively both be "H"-shaped structures, "V"-shaped structures, "X"-shaped structures, or the like.

By setting both the first groove 252 and the score groove 249 as annular groove structures, the pressure relief portion 241 and the second weakened portion 250 are both annular structures. The pressure relief component 24 with this structure makes the shape of the first groove 252 identical to the shape of the score groove 249, and thus only the region of the pressure relief component 24 in which the score groove 249 is to be provided requires to be locally thinned, which helps to reduce the processing difficulty of the first groove 252 and minimize the processing scope of the first groove 252. Additionally, by providing the annular score groove 249, when the pressure relief component 24 releases the internal pressure of the battery cell 20, the region inside the score groove 249 can detach entirely after the pressure relief component 24 ruptures along the score groove 249, which helps to increase the pressure relief area and rate of the pressure relief component 24.

According to some embodiments of this application, as shown in FIG. 5 and FIG. 6, along the thickness direction X of the pressure relief component, the first surface 251 is provided facing away from the interior of the battery cell 20.

The first surface 251 is provided facing away from the interior of the battery cell 20, to be specific, the first surface 251 is provided facing away from the interior of the housing 21 of the battery cell 20, in other words, the first groove 252 and the score groove 249 are provided on the side of the pressure relief component 24 facing away from the electrode assembly 22 of the battery cell 20. Certainly, in other embodiments, the first groove 252 and the score groove 249 may alternatively be provided on the side of the pressure relief component 24 facing the interior of the housing 21 of the battery cell 20.

By setting the first surface 251 as the surface of the pressure relief component 24 facing away from the interior of the battery cell 20, the score groove 249 is provided on the side of the pressure relief component 24 facing away from the interior of the battery cell 20, which helps to reduce the processing difficulty of the score groove 249 and facilitates the formation of the score groove 249 on the pressure relief component 24.

According to some embodiments of this application, as further shown in FIG. 5 and FIG. 6, along the thickness direction X of the pressure relief component, the pressure relief component 24 has a second surface 253 opposite the first surface 251, a second groove 254 being provided at a position in which the second surface 253 corresponds to the first groove 252, and an extension direction of the second groove 254 being the same as the extension direction of the first groove 252.

The pressure relief component 24 has a second surface 253 opposite the first surface 251 along the thickness direction X of the pressure relief component, meaning that the first surface 251 and the second surface 253 are respectively provided on the two sides of the pressure relief component 24 along the thickness direction X of the pressure relief component.

The second groove 254 is provided at a position in which the second surface 253 corresponds to the first groove 252, and the extension direction of the second groove 254 is the same as the extension direction of the first groove 252, meaning that the first groove 252 and the second groove 254 are oppositely disposed along the thickness direction X of the pressure relief component, and the shape of the first groove 252 is the same as the shape of the second groove 254, so that the score groove 249 is provided on the region of the pressure relief component 24 between the groove bottom surface of the first groove 252 and the groove bottom surface of the second groove 254, and the region of the pressure relief component 24 between the groove bottom surface of the first groove 252 and the groove bottom surface of the second groove 254 that is not provided with the score groove 249 and located between the score groove 249 and the reinforcing portion 242 is the second weakened portion 250.

The pressure relief component 24 also has a second surface 253 opposite the first surface 251. By providing the second groove 254 at a position on the second surface 253 corresponding to the first groove 252 with the same extension direction as the first groove 252, the region of the pressure relief component 24 for providing the score groove 249 can be locally thinned through the first groove 252 and the second groove 254. This allows the formation of the second weakened portion 250 by thinning from the two sides of the pressure relief component 24 via the first groove 252 and the second groove 254, which facilitates operation and processing, and helps to reduce the processing difficulty of forming the second weakened portion 250 on the pressure relief component 24. Additionally, this can improve the material flow during the formation of the score groove 249, and facilitate the flow of material generated during the formation of the score groove 249, thereby enhancing the structural consistency of the score groove 249.

According to some embodiments of this application, as shown in FIG. 10, FIG. 11, and FIG. 12, the pressure relief portion 241 is provided separately from the reinforcing portion 242, the pressure relief portion 241 is mounted on the reinforcing portion 242, the pressure relief portion 241 is provided with a score groove 249, and the pressure relief portion 241 is capable of rupturing along the score groove 249 when the battery cell 20 relieves pressure.

The pressure relief portion 241 is provided separately from the reinforcing portion 242, meaning that the pressure relief portion 241 is an independently provided component on the pressure relief component 24, and the pressure relief portion 241 can be mounted on the reinforcing portion 242 through processes such as welding.

The pressure relief portion 241 is provided with the score groove 249, and the pressure relief portion 241 is capable of rupturing along the score groove 249 when the battery cell 20 relieves pressure, to be specific, the pressure relief portion 241 is provided with the score groove 249 to form a weakened region, so that the pressure relief portion 241 can rupture along the score groove 249 when the battery cell 20 relieves pressure, so as to release the internal pressure of the battery cell 20.

In an example, the pressure relief portion 241 may be an explosion-proof valve, an explosion-proof disc, a gas valve, a pressure relief valve, a safety valve, or the like.

By setting the pressure relief portion 241 and the reinforcing portion 242 as separately provided structures, and by providing the score groove 249 on the pressure relief portion 241, the pressure relief portion 241 can rupture along the score groove 249 to release the internal pressure of the battery cell 20. This structure helps to reduce the difficulty of providing the pressure relief portion 241 on the pressure relief component 24, thereby lowering the manufacturing difficulty of the pressure relief component 24 and improving the production efficiency of the pressure relief component 24.

According to some embodiments of this application, as shown in FIG. 3 and FIG. 4, an embodiment of this application further provides a battery cell 20, the battery cell 20 including the pressure relief component 24 according to any one of the above solutions, and the pressure relief component 24 being configured to release the internal pressure of the battery cell 20.

The battery cell 20 includes a housing 21, and the pressure relief component 24 is provided on the housing 21. Optionally, the pressure relief component 24 provided on the housing 21 of the battery cell 20 may have various structures. The pressure relief component 24 may be a structure provided separately from the housing 21, or the pressure relief component 24 may be one wall of the housing 21. When the pressure relief component 24 is a structure provided separately from the housing 21, to be specific, when the housing 21 is provided with a pressure relief hole for mounting the pressure relief component 24 and the pressure relief component 24 is connected to the housing 21 and covers the pressure relief hole, the pressure relief component 24 and the housing 21 may be connected in various manner, for example, through welding or snapping, and similarly, the pressure relief component 24 may be mounted on an end cover 212 of the housing 21 or on a shell 211 of the housing 21. When the pressure relief component 24 is one wall of the housing 21, to be specific, when the pressure relief component 24 is integrated into the housing 21 and forms one wall of the housing 21, the pressure relief component 24 may be the end cover 212 of the housing 21 or may be one wall of the shell 211 of the housing 21.

According to some embodiments of this application, as shown in FIG. 4, FIG. 5, and FIG. 6, or as shown in FIG. 8 and FIG. 9, or as shown in FIG. 10, FIG. 11, and FIG. 12, the battery cell 20 further includes a housing 21, the housing 21 having a wall portion 213, and the pressure relief component 24 being the wall portion 213.

The housing 21 have the wall portion 213, and the pressure relief component 24 is the wall portion 213, meaning that the pressure relief component 24 is one wall of the housing 21, to be specific, the pressure relief component 24 is integrated into the housing 21, and the pressure relief component 24 may be the end cover 212 of the housing 21, so that the pressure relief component 24 can close the opening 2111 of the shell 211. Certainly, the pressure relief component 24 may alternatively be one wall of the shell 211, so that the pressure relief component 24 can enclose with other walls of the shell 211 to form an accommodation cavity for accommodating the electrode assembly 22.

In an example, in FIG. 4, FIG. 5, and FIG. 6, the pressure relief component 24 is the end cover 212 of the housing 21 of the battery cell 20, and the pressure relief component 24 is connected to the shell 211 and covers the opening 2111 of the shell 211.

In an example, in FIG. 10, FIG. 11, and FIG. 12, the pressure relief component 24 is one wall of the shell 211 of the housing 21, and the pressure relief component 24 is connected to other walls of the shell 211 to enclose an accommodation cavity for accommodating the electrode assembly 22. In this embodiment, the electrode terminals 23 may be mounted on the shell 211 or may be mounted on the end cover 212. In an example, in FIG. 10, the electrode terminals 23 are mounted on the end cover 212.

It should be noted that in embodiments in which the pressure relief component 24 is the end cover 212 or one wall of the shell 211 of the housing 21, the pressure relief portion 241 of the pressure relief component 24 may be an integral structure with the reinforcing portion 242 or a separate structure. In an example, in FIG. 4, FIG. 5, and FIG. 6, the pressure relief portion 241 and the reinforcing portion 242 are integrally formed structures, and in FIG. 10, FIG. 11, and FIG. 12, the pressure relief portion 241 and the reinforcing portion 242 are separate structures.

The housing 21 has a wall portion 213, and the pressure relief component 24 is the wall portion 213 of the housing 21, meaning that the pressure relief component 24 is one wall of the housing 21, so that the first weakened portion 243 of the pressure relief component 24 can effectively absorb the deformation energy generated by the housing 21 of the battery cell 20 when the housing 21 deforms, thereby protecting the pressure relief portion 241.

In some embodiments, the battery cell 20 may further have other structures. For example, the battery cell 20 further includes a housing 21, the housing 21 having a wall portion 213, the wall portion 213 having a pressure relief hole, and the pressure relief component 24 being mounted on the wall portion 213 and covering the pressure relief hole.

The pressure relief component 24 is mounted on the wall portion 213 and covers the pressure relief hole, meaning that the pressure relief component 24 is a component independent of the housing 21, to be specific, the pressure relief component 24 and the housing 21 are separately provided structures, the pressure relief component 24 being connected to the wall portion 213 of the housing 21 through processes such as welding and covering the pressure relief hole provided on the wall portion 213 of the housing 21, so that the pressure relief portion 241 of the pressure relief component 24 can release the internal pressure of the battery cell 20 through the pressure relief hole when destroyed.

The housing 21 has a wall portion 213, and the pressure relief component 24 is mounted on the wall portion 213 and covers the pressure relief hole of the wall portion 213, meaning that the pressure relief component 24 and the housing 21 are separately provided structures, and the pressure relief component 24 is an independent component mounted on one wall of the housing 21. This structure helps to reduce the difficulty in assembling the pressure relief component 24 and the housing 21, thereby improving the production efficiency of the battery cell 20.

According to some embodiments of this application, as shown in FIG. 3, FIG. 4, and FIG. 5, the housing 21 may include a shell 211 and an end cover 212; the shell 211 having an accommodation cavity with an opening 2111 formed inside, the accommodation cavity being configured to accommodate an electrode assembly 22, and the end cover 212 closing the opening 2111; where the end cover 212 is the wall portion 213.

The end cover 212 is the wall portion 213, meaning that the pressure relief component 24 is the end cover 212 or the pressure relief component 24 is mounted on the end cover 212. To be specific, in embodiments in which the pressure relief component 24 is the wall portion 213 of the housing 21, the pressure relief component 24 is the end cover 212 of the housing 21, and in embodiments in which the pressure relief component 24 is mounted on the wall portion 213 of the housing 21, the pressure relief hole is provided on the end cover 212, with the pressure relief component 24 mounted on the end cover 212 and covering the pressure relief hole.

By setting the wall portion 213 of the housing 21 as the end cover 212 configured to close the opening 2111 of the shell 211 of the housing 21, the battery cell 20 with this structure facilitates the mounting of the pressure relief component 24 or the formation of the pressure relief portion 241 and the first weakened portion 243 on the end cover 212, thereby effectively reducing the processing difficulty of the battery cell 20 and improving the production efficiency of the battery cell 20.

According to some embodiments of this application, as shown in FIG. 10, FIG. 11, and FIG. 12, the housing 21 may include a shell 211 and an end cover 212; the shell 211 having an accommodation cavity with an opening 2111 formed inside, and the accommodation cavity being configured to accommodate an electrode assembly 22. The end cover 212 closes the opening 2111, and the shell 211 includes the wall portion 213.

The shell 211 includes the wall portion 213, meaning that the pressure relief component 24 is one wall of the shell 211 or the pressure relief component 24 is mounted on one wall of the shell 211. To be specific, in embodiments in which the pressure relief component 24 is the wall portion 213 of the housing 21, the pressure relief component 24 is one wall of the shell 211, and in embodiments in which the pressure relief component 24 is mounted on the wall portion 213 of the housing 21, the pressure relief hole is provided on one wall of the shell 211, with the pressure relief component 24 mounted on one wall of the shell 211 and covering the pressure relief hole.

In an example, in FIG. 10, the shell 211 includes an integrally formed sidewall and bottom wall, the sidewall surrounding the periphery of the bottom wall, along the thickness direction of the bottom wall, one end of the sidewall being connected to the bottom wall, and the other end enclosing to form the opening 2111, the bottom wall being disposed opposite the end cover 212, the sidewall and the bottom wall together defining an accommodation cavity for accommodating the electrode assembly 22, and the end cover 212 closing the opening 2111. The sidewall includes four sequentially connected walls, the four walls including two oppositely disposed first walls 2112 and two oppositely disposed second walls 2113, and the first walls 2112 being surfaces with the largest area among the outer surfaces of the battery cell 20. Optionally, the wall portion 213 may be a bottom wall of the shell 211, the first wall 2112 of the shell 211, or the second wall 2113 of the shell 211. In an example, in FIG. 10, the wall portion 213 is the second wall 2113 of the shell 211, and the pressure relief component 24 is the second wall 2113 of the shell 211. Since the first walls 2112 are the surfaces with the largest area among the outer surfaces of the battery cell 20, the first walls 2112 are more prone to deformation during the use of the battery cell 20, with a larger deformation amount. Thus, setting the pressure relief component 24 as the second wall 2113 of the shell 211 can effectively mitigate the deformation of the pressure relief component 24, and through the first weakened portion 243, can effectively absorb the deformation energy generated by the first wall 2112, thereby improving the protective effect on the pressure relief portion 241 of the pressure relief component 24.

By setting the wall portion 213 of the housing 21 as one wall of the shell 211, the battery cell 20 with this structure can reduce the impact of stress generated by the connection between the end cover 212 and the shell 211 on the pressure relief portion 241, thereby reducing phenomena such as cracking of the pressure relief portion 241 and the first weakened portion 243, and consequently improving the operational stability and service life of the battery cell 20.

According to some embodiments of this application, an embodiment of this application further provides a battery 100, the battery 100 including the battery cell 20 according to any one of the above solutions.

As shown in FIG. 2, the battery 100 may further include a box 10, the battery cell 20 being accommodated within the box 10.

In some embodiments, the box 10 may include a first box body 11 and a second box body 12, the first box body 11 and the second box body 12 being mutually covered, and the first box body 11 and the second box body 12 together defining an assembly space for accommodating the battery cells 20.

Optionally, the second box body 12 may be a hollow structure with an open end, the first box body 11 may be a plate-like structure, and the first box body 11 covers the open side of the second box body 12, so that the first box body 11 and the second box body 12 together define the assembly space. The first box body 11 and the second box body 12 may alternatively both be hollow structures with an open side, with the open side of the first box body 11 covering the open side of the second box body 12.

Certainly, the box 10 formed by the first box body 11 and the second box body 12 may have various shapes, such as a cylinder or a cuboid, etc. In an example, in FIG. 2, the box 10 is a cuboid structure.

Optionally, the battery cell 20 provided within the box 10 may be provided in one or plurality. In an example, in FIG. 2, a plurality of battery cells 20 are provided within the box 10 of the battery 100, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entire module formed by the plurality of battery cells 20 is accommodated within the box 10. Certainly, the battery 100 may alternatively be formed by first connecting a plurality of battery cells 20 in series, parallel, or series-parallel to form a battery module, and then a plurality of battery modules are connected in series, parallel, or series-parallel to form an entirety, which is accommodated within the box 10.

The battery 100 may further have other structures. For example, the battery 100 may further include a busbar, the busbar connecting a plurality of battery cells 20 to achieve electrical connection between the plurality of battery cells 20.

It should be noted that in some embodiments, the battery 100 may not be provided with a box 10, the battery 100 includes a plurality of battery cells 20, and the battery 100 formed by the plurality of battery cells 20 may be directly assembled onto an electrical apparatus to provide electrical energy to the electrical apparatus through the plurality of battery cells 20. In other words, the box 10 may be used as part of the electrical apparatus. The electrical apparatus being a vehicle 1000 is used as an example. The box 10 may be part of the chassis structure of the vehicle 1000. For example, part of the box 10 may become at least part of the floor of the vehicle 1000, or part of the box 10 may become at least parts of the crossbeams and longitudinal beams of the vehicle 1000.

According to some embodiments of this application, an embodiment of this application further provides an electrical apparatus, the electrical apparatus including the battery 100 according to any one of the above solutions, and the battery 100 being configured to provide electrical energy to the electrical apparatus.

The electrical apparatus may be any of the aforementioned devices or systems that apply the battery 100.

According to some embodiments of this application, as shown in FIG. 4 to FIG. 7, this application provides a pressure relief component 24, the pressure relief component 24 including an integrally formed body portion 245, pressure relief portion 241, reinforcing portion 242, and first weakened portion 243. The pressure relief portion 241 is an annular structure, and the pressure relief portion 241 is configured to rupture when the battery cell 20 relieves pressure, so as to release the internal pressure of the battery cell 20. The reinforcing portion 242 is connected to the pressure relief portion 241, and the reinforcing portion 242 is arranged around the pressure relief portion 241. The pressure relief component 24 is provided with a first concave groove 244, the first concave groove 244 being provided on a side of the pressure relief component 24 facing the interior of the battery cell 20, and the pressure relief component 24 forms the first weakened portion 243 in a region in which the first concave groove 244 is provided, the first concave groove 244 being an annular groove, so that the first weakened portion 243 is an annular structure. The first weakened portion 243 connects the reinforcing portion 242 and the body portion 245, and the first weakened portion 243 surrounds the outer side of the reinforcing portion 242, a thickness of the first weakened portion 243 being less than a thickness of the reinforcing portion 242 and a thickness of the body portion 245. Along a thickness direction X of the pressure relief component, a second concave groove 247 is formed on the side of the pressure relief component 24 facing away from the interior of the battery cell 20, and a convex portion 248 is formed on the other side at a position corresponding to the second concave groove 247. The reinforcing portion 242 encloses the groove sidewall of the second concave groove 247. Along a radial direction of the reinforcing portion 242, the first weakened portion 243 is connected to the outer side of the reinforcing portion 242, and the first concave groove 244 is provided on the groove bottom surface of the second concave groove 247, so that the groove bottom wall of the second concave groove 247 includes the pressure relief portion 241. Along the thickness direction X of the pressure relief component, the pressure relief component 24 has a first surface 251 and a second surface 253 that are opposite. The first surface 251 is provided facing away from the interior of the battery cell 20, and the first surface 251 is provided with a first groove 252. The groove bottom surface of the first groove 252 is provided with a score groove 249, an extension direction of the first groove 252 being the same as an extension direction of the score groove 249, the first groove 252 and the score groove 249 both being annular grooves, and the groove bottom wall of the first groove 252 including the second weakened portion 250. The second surface 253 is provided with a second groove 254 at a position corresponding to the first groove 252, the extension direction of the second groove 254 being the same as the extension direction of the first groove 252. A thickness of the first weakened portion 243 is D₁, and a thickness of the body portion 245 is D₂, meeting 0.5D₂ ≤ D₁ ≤ 0.7D₂. A groove width of the first concave groove 244 is W, meeting 2 mm ≤ W ≤ 5 mm.

According to some embodiments of this application, as shown in FIG. 3 and FIG. 4, this application provides a battery cell 20, the battery cell 20 including a housing 21, an electrode assembly 22, and a pressure relief component 24. The housing 21 includes a shell 211 and an end cover 212, the shell 211 having an accommodation cavity with an opening 2111 formed inside, the electrode assembly 22 being accommodated within the accommodation cavity, and the end cover 212 closing the opening 2111. The pressure relief component 24 is the end cover 212.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A pressure relief component applied to a battery cell, the pressure relief component comprising:
a pressure relief portion configured to rupture when the battery cell relieves pressure, so as to release the internal pressure of the battery cell;
a reinforcing portion connected to the pressure relief portion, the reinforcing portion being arranged around the pressure relief portion; and
a first weakened portion connected to the pressure relief portion via the reinforcing portion, stiffness of the first weakened portion being less than stiffness of the reinforcing portion.

2. The pressure relief component according to claim 1, wherein a thickness of the first weakened portion is less than a thickness of the reinforcing portion.

3. The pressure relief component according to claim 1 or 2, wherein the pressure relief component further comprises a body portion, the first weakened portion connecting the body portion and the reinforcing portion;
wherein the stiffness of the first weakened portion is less than stiffness of the body portion.

4. The pressure relief component according to claim 3, wherein the thickness of the first weakened portion is less than a thickness of the body portion.

5. The pressure relief component according to claim 4, wherein the thickness of the first weakened portion is D₁, and the thickness of the body portion is D₂, meeting 0.3D₂ ≤ D₁ ≤ 0.9D₂.

6. The pressure relief component according to claim 5, wherein 0.5D₂ ≤ D₁ ≤ 0.7D₂.

7. The pressure relief component according to any one of claims 3 to 6, wherein the pressure relief component is provided with a first concave groove, and the pressure relief component forms the first weakened portion in a region in which the first concave groove is provided.

8. The pressure relief component according to claim 7, wherein a groove width of the first concave groove is W, meeting 0.5 mm ≤ W ≤ 10 mm.

9. The pressure relief component according to claim 8, wherein 2 mm ≤ W ≤ 5 mm.

10. The pressure relief component according to any one of claims 7 to 9, wherein the first concave groove is provided on a side of the pressure relief component facing the interior of the battery cell.

11. The pressure relief component according to any one of claims 7 to 9, wherein the first concave groove is provided on a side of the pressure relief component facing away from the interior of the battery cell.

12. The pressure relief component according to any one of claims 7 to 9, wherein the first concave groove is provided on two sides of the pressure relief component.

13. The pressure relief component according to any one of claims 7 to 11, wherein a protrusion is formed on a side of the pressure relief component facing away from the first concave groove and corresponding to a position of the first concave groove.

14. The pressure relief component according to claim 13, wherein along a thickness direction of the first weakened portion, a projection of the protrusion covers a portion of the groove bottom surface of the first concave groove.

15. The pressure relief component according to claim 14, wherein the groove width of the first concave groove is W, and along a groove width direction of the first concave groove, a dimension of a portion of the first weakened portion not forming the protrusion is L, meeting 0.1W ≤ L ≤ 0.5W.

16. The pressure relief component according to any one of claims 1 to 15, wherein the first weakened portion is an annular structure extending along a circumferential direction of the reinforcing portion.

17. The pressure relief component according to any one of claims 1 to 15, wherein a dimension of the pressure relief component in a first direction is less than a dimension of the pressure relief component in a second direction, the first direction, the second direction, and the thickness direction of the pressure relief component being pairwise perpendicular;
wherein along the first direction, at least one side of the reinforcing portion is provided with the first weakened portion.

18. The pressure relief component according to claim 17, wherein along the first direction, the first weakened portion is provided on each of two sides of the reinforcing portion.

19. The pressure relief component according to claim 17 or 18, wherein a length of the first weakened portion in the second direction is greater than a dimension of the pressure relief portion in the second direction.

20. The pressure relief component according to claim 19, wherein along the second direction, two ends of the first weakened portion extend to two ends of the pressure relief component, respectively.

21. The pressure relief component according to any one of claims 1 to 20, wherein along the thickness direction of the pressure relief component, a second concave groove is formed on the side of the pressure relief component facing away from the interior of the battery cell, and a convex portion is formed on the other side at a position corresponding to the second concave groove;
wherein a groove bottom wall of the second concave groove comprises the pressure relief portion.

22. The pressure relief component according to claim 21, wherein the reinforcing portion encloses a groove sidewall of the second concave groove, and along a radial direction of the reinforcing portion, the first weakened portion is connected to an outer side of the reinforcing portion.

23. The pressure relief component according to claim 21, wherein the pressure relief component further comprises a body portion, the first weakened portion connecting the body portion and the reinforcing portion, and the stiffness of the first weakened portion being less than stiffness of the body portion;
wherein a groove sidewall of the second concave groove comprises the first weakened portion, and along the thickness direction of the pressure relief component, the first weakened portion is connected between the body portion and the reinforcing portion.

24. The pressure relief component according to any one of claims 1 to 23, wherein the pressure relief portion is integrally formed with the reinforcing portion, the pressure relief component is provided with a score groove, the pressure relief component forms the pressure relief portion in a region in which the score groove is provided, and the pressure relief component is capable of rupturing along the score groove when the battery cell relieves pressure.

25. The pressure relief component according to claim 24, wherein the pressure relief component further comprises a second weakened portion, the reinforcing portion being connected to the pressure relief portion via the second weakened portion, a thickness of the second weakened portion being less than the thickness of the reinforcing portion and greater than the thickness of the pressure relief portion.

26. The pressure relief component according to claim 25, wherein along the thickness direction of the pressure relief component, the pressure relief component has a first surface, a first groove being provided on the first surface;
wherein the groove bottom surface of the first groove is provided with the score groove, an extension direction of the first groove is the same as an extension direction of the score groove, and the groove bottom wall of the first groove comprises the second weakened portion.

27. The pressure relief component according to claim 26, wherein the first groove and the score groove are both annular grooves.

28. The pressure relief component according to claim 26 or 27, wherein along the thickness direction of the pressure relief component, the first surface is provided facing away from the interior of the battery cell.

29. The pressure relief component according to any one of claims 26 to 28, wherein along the thickness direction of the pressure relief component, the pressure relief component has a second surface opposite the first surface, a second groove being provided at a position in which the second surface corresponds to the first groove, and an extension direction of the second groove being the same as the extension direction of the first groove.

30. The pressure relief component according to any one of claims 1 to 23, wherein the pressure relief portion is provided separately from the reinforcing portion, the pressure relief portion is mounted on the reinforcing portion, the pressure relief portion is provided with a score groove, and the pressure relief portion is capable of rupturing along the score groove when the battery cell relieves pressure.

31. A battery cell, comprising the pressure relief component according to any one of claims 1 to 30, the pressure relief component being configured to release the internal pressure of the battery cell.

32. The battery cell according to claim 31, wherein the battery cell further comprises:
a housing having a wall portion;
wherein the pressure relief component is the wall portion.

33. The battery cell according to claim 31, wherein the battery cell further comprises:
a housing having a wall portion, the wall portion having a pressure relief hole;
wherein the pressure relief component is mounted on the wall portion and covers the pressure relief hole.

34. The battery cell according to claim 32 or 33, wherein the housing comprises:
a shell, the shell having an accommodation cavity with an opening formed inside, the accommodation cavity being configured to accommodate an electrode assembly;
an end cover closing the opening;
wherein the end cover is the wall portion.

35. The battery cell according to claim 32 or 33, wherein the housing comprises:
a shell, the shell has an accommodation cavity with an opening formed inside, the accommodation cavity being configured to accommodate an electrode assembly; and
an end cover closing the opening;
wherein the shell comprises the wall portion.

36. A battery comprising the battery cell according to any one of claims 31 to 35.

37. An electrical apparatus comprising the battery according to claim 36.
